(19) Europäisches Patentamt
European Patent Office
Office européen des brevets

(11) **EP 2 314 545 B1**

(12) **EUROPEAN PATENT SPECIFICATION**

(45) Date of publication and mention
of the grant of the patent:
**07.03.2018 Bulletin 2018/10**

(51) Int Cl.:
***C01G 51/04*** *(2006.01)*     ***H01M 4/52*** *(2010.01)*

(21) Application number: **09725552.5**

(22) Date of filing: **26.03.2009**

(86) International application number:
**PCT/JP2009/001377**

(87) International publication number:
**WO 2009/119104 (01.10.2009 Gazette 2009/40)**

(54) **OXYCOBALT HYDROXIDE PARTICULATE POWDER AND MANUFACTURING METHOD THEREFOR, AS WELL AS LITHIUM COBALTATE PARTICULATE POWDER AND NON-AQUEOUS ELECTROLYTE SECONDARY BATTERY USING THE SAME**

PARTIKELFÖRMIGES OXYCOBALTHYDROXIDPULVER UND HERSTELLUNGSVERFAHREN DAFÜR SOWIE PARTIKELFÖRMIGES LITHIUMCOBALTATPULVER UND SEKUNDÄRBATTERIE MIT NICHTWÄSSRIGEM ELEKTROLYT UNTER VERWENDUNG DAVON

POUDRE DE PARTICULES D HYDROXYDE D OXYCOBALT ET PROCÉDÉ DE FABRICATION DE CETTE POUDRE, ET ÉGALEMENT POUDRE DE PARTICULES DE COBALTATE DE LITHIUM ET BATTERIE SECONDAIRE À ÉLECTROLYTE NON AQUEUX LES UTILISANT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.03.2008   JP 2008088214**
**13.11.2008   JP 2008291451**

(43) Date of publication of application:
**27.04.2011   Bulletin 2011/17**

(73) Proprietor: **Toda Kogyo Corp.**
**Hiroshima-shi, Hiroshima 732-0828 (JP)**

(72) Inventors:
• **KOBINO, Masashi**
**Onoda-shi**
**Yamaguchi 756-0847 (JP)**
• **FUJITA, Katsuhiro**
**Onoda-shi**
**Yamaguchi 756-0847 (JP)**
• **OKAZAKI, Seiji**
**Otake-shi**
**Hiroshima 739-0652 (JP)**
• **HONDA, Tomohiro**
**Otake-shi**
**Hiroshima 739-0652 (JP)**
• **NISHIO, Takahisa**
**Otake-shi**
**Hiroshima 739-0652 (JP)**
• **FUJIMOTO, Ryota**
**Otake-shi**
**Hiroshima 739-0652 (JP)**
• **HIRAMOTO, Toshiaki**
**Otake-shi**
**Hiroshima 739-0652 (JP)**
• **SATO, Kouta**
**Otake-shi**
**Hiroshima 739-0652 (JP)**
• **ITO, Akino**
**Otake-shi**
**Hiroshima 739-0652 (JP)**
• **OKINAKA, Kenji**
**Onoda-shi**
**Yamaguchi 756-0847 (JP)**
• **FUJINO, Shoichi**
**Onoda-shi**
**Yamaguchi 756-0847 (JP)**
• **NISHIMOTO, Kazushi**
**Onoda-shi**
**Yamaguchi 756-0847 (JP)**
• **UEGAMI, Masayuki**
**Onoda-shi**
**Yamaguchi 756-0847 (JP)**
• **MORITA, Daisuke**
**Onoda-shi**
**Yamaguchi 756-0847 (JP)**
• **KAJIYAMA, Akihisa**
**Onoda-shi**
**Yamaguchi 756-0847 (JP)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(74) Representative: **J A Kemp**
**14 South Square**
**Gray's Inn**
**London WC1R 5JJ (GB)**

(56) References cited:
**WO-A1-01/27032      WO-A1-2009/003573**

**JP-A- 2002 042 811      JP-A- 2003 002 661**
**JP-A- 2004 035 342      JP-A- 2004 182 564**
**JP-A- 2004 196 603      JP-A- 2005 104 771**
**JP-A- 2005 206 422      JP-A- 2007 001 809**
**JP-A- 2007 084 410**

**Description**

TECHNICAL FIELD

The present invention relates to cobalt oxyhydroxide particles having a high density which are in the form of uniformly grown crystals. The cobalt oxyhydroxide particles of the present invention are useful as a precursor of a positive electrode active substance (lithium cobaltate particles) used in a non-aqueous electrolyte secondary battery.

In addition, the present invention relates to lithium cobaltate particles having a high density which are in the form of uniformly grown crystals. The lithium cobaltate particles of the present invention are useful as a positive electrode active substance used in a non-aqueous electrolyte secondary battery.

BACKGROUND ART

With the recent rapid development of portable and cordless electronic devices such as audio-visual (AV) devices and personal computers, there is an increasing demand for secondary batteries (cells) or having a small size, a light weight and a high energy density as a power source for driving these electronic devices. Under these circumstances, the lithium ion secondary batteries having advantages such as a high charge/discharge voltage and a large charge/discharge capacity have been noticed.

Hitherto, as positive electrode active substances useful for high energy-type lithium ion secondary batteries exhibiting a 4 V-grade voltage, there are generally known $LiMn_2O_4$ having a spinel structure, $LiMnO_2$ having a zigzag layer structure, $LiCoO_2$, $LiCO_{1-x}Ni_xO_2$ and $LiNiO_2$ having a layer rock-salt structure, or the like. Among the secondary batteries using these active substances, lithium ion secondary batteries using $LiCoO_2$ are excellent in view of a high charge/discharge voltage and a large charge/discharge capacity thereof. However, it has been demanded that the batteries are further improved in their characteristics.

Specifically, when lithium is released from $LiCoO_2$, the crystal structure of $LiCoO_2$ suffers from Jahn-Teller distortion since $Co^{3+}$ is transformed into $Co^{4+}$. When the amount of Li released reaches 0.45, the crystal structure of such a lithium-released region of $LiCoO_2$ is transformed from hexagonal system into monoclinic system, and a further release of lithium therefrom causes transformation of the crystal structure from monoclinic system into hexagonal system. Therefore, when the charge/discharge reaction is repeated, the crystal structure of $LiCoO_2$ tends to become unstable, so that the resulting secondary battery tends to suffer from release of oxygen therefrom and occurrence of undesired reaction with an electrolyte solution.

In consequence, there is a demand for $LiCoO_2$ which can maintain stable characteristics and is excellent in cycle characteristics even when subjected to repeated charge/discharge reactions.

Also, there is a demand for a positive electrode having a packing density capable of imparting a high capacity thereto. In order to attain a high electrode density of the positive electrode, it has been required to enhance a packing property of lithium cobaltate such as a compression density thereof (under the pressure which will be applied to the electrode upon subjecting the electrode to rolling).

In addition, it has been required that the lithium cobaltate has as small a specific surface area as possible in order to prevent occurrence of battery swelling and improve a thermal stability thereof.

Further, the lithium cobaltate tends to exhibit a high reactivity with the electrolyte solution at a high temperature. Therefore, in order to ensure a high safety of secondary batteries, it has been required that the positive electrode active substance used therein can maintain a stable structure and exhibit an improved thermal stability even under a high temperature condition.

The lithium cobaltate is generally produced by mixing a raw cobalt material such as cobalt oxyhydroxide (CoOOH), cobalt hydroxide ($Co(OH)_2$) and cobalt oxide ($Co_3O_4$) with a raw lithium material such as lithium carbonate and lithium hydroxide and calcining the resulting mixture.

The properties of the lithium cobaltate vary depending upon the properties of the raw cobalt material as a precursor of the lithium cobaltate. Therefore, it has also been required that the raw cobalt material is further improved in its properties.

It is conventionally known that cobalt oxyhydroxide as a precursor of the lithium cobaltate is controlled in tap density and particle shape thereof (Patent Documents 1 to 4).

In addition, it is also known that lithium cobaltate particles are controlled in tap density, compressed density and the like (Patent Documents 2 and 5 to 7).

Patent Document 1: Japanese Patent Application Laid-Open (KOKAI) No. 2004-35342
Patent Document 2: Japanese Patent Application Laid-Open (KOKAI) No. 2004-196603
Patent Document 3: Japanese Patent Application Laid-Open (KOKAI) No. 2005-104771

Patent Document 4: Japanese Patent Application Laid-Open (KOKAI) No. 2007-1809
Patent Document 5: Japanese Patent Application Laid-Open (KOKAI) No. 2003-2661
Patent Document 6: Japanese Patent Application Laid-Open (KOKAI) No. 2004-182564
Patent Document 7: Japanese Patent Application Laid-Open (KOKAI) No. 2005-206422
Patent Document 8: WO 2009/003573 A1
Patent Document 9: Japanese Patent Application Laid-Open (KOKAI) No. 2007-084410

## DISCLOSURE OF THE INVENTION

## PROBLEMS TO BE SOLVED BY THE INVENTION

At present, it has been strongly required to provide a positive electrode active substance and cobalt oxyhydroxide particles which are capable of satisfying the above various properties. However, such materials have not been obtained until now.

That is, in Patent Documents 1, 3 and 4, there are described cobalt oxyhydroxide particles having a spherical shape and a high density. However, the cobalt oxyhydroxide particles have a large BET specific surface area, so that when using the cobalt oxyhydroxide particles to produce lithium cobaltate and forming the lithium cobaltate into an electrode, the resulting battery tends to be unsatisfactory in cycle characteristics.

Also, in Patent Document 2, it is described that lithium cobaltate particles are produced by using cobalt oxyhydroxide particles having an angle of repose of 50° or less and a tap density of 1.3 to 1.8 $g/cm^3$ as a precursor thereof. However, since the cobalt oxyhydroxide particles have a low tap density, it may be difficult to obtain an electrode exhibiting an enhanced electrode density therefrom, so that the electrode may fail to exhibit a sufficient capacity per unit volume thereof.

At present, it is also strongly required to provide a positive electrode active substance and lithium cobaltate particles which are capable of satisfying the above various characteristics. However, such materials have not been obtained until now.

In Patent Document 5, there are described lithium cobaltate particles having a weight-average particle diameter of 5 to 15 $\mu$m and a specific surface area of 0.15 to 0.6 $m^2/g$. However, since the specific surface area of a precursor of the lithium cobaltate particles is large, when the precursor is subjected to calcination, primary particles thereof tend to be sintered together, so that the resulting battery tends to hardly exhibit excellent cycle characteristics.

In Patent Document 6, there are described lithium cobaltate particles having a tap density of not less than 1.8 $g/cm^3$ and a compressed density of 3.5 to 4.0 $g/cm^3$ as measured by applying a pressure of 2 $ton/cm^2$ thereto. However, in order attain the above properties of the lithium cobaltate particles, two kinds of components must be mixed, and the resulting particles may fail to exhibit excellent rate characteristics and cycle characteristics.

In Patent Document 2, there are described lithium cobaltate particles having an average particle diameter of 10 to 15 $\mu$m. However, since a primary particle diameter of the lithium cobaltate particles is small as long as recognized from an SEM microphotograph thereof, the resulting particles may fail to exhibit an excellent thermal stability. In addition, since the tap density of the precursor is low, an electrode obtained therefrom may fail to exhibit a high electrode density.

In Patent Document 7, there are described lithium cobaltate particles having a specific particle size distribution, a bulk density of 1.20 to 2.20 $g/cm^3$ and a tap density of 2.30 to 3.00 $g/cm^3$. However, since the average particle diameter of the lithium cobaltate particles is small, the compressed density thereof tends to become low, so that the resulting electrode (positive electrode) obtained from the particles tends to exhibit a low density.

Patent Document 8 relates to a higher density $LiCoO_2$ positive electrode material for lithium secondary batteries, with a specific surface area (BET) below 0.2 $m^2/g$, and a volumetric median particle size (d50) of more than 15$\mu$m. This product is said to have improved specific capacity and rate-capability.

Patent Document 9 describes a lithium cobalt composite oxide of general formula $Li_aCo_{1-b}M_bO_2$ (wherein, M is at least an element selected from the group consisting of a transition metal element except Co, Al and an alkaline-earth metal element; $0.9 \leq a \leq 1.2$; and $0 < b \leq 0.03$). The method for producing the lithium cobalt composite oxide comprises a step to obtain an M-containing cobalt mixture powder by impregnating a cobalt compound powder with an M-containing aqueous solution in which an M-containing compound is dissolved, followed by drying, a step to obtain a raw material mixture powder by mixing the cobalt mixture powder and a lithium compound powder and water and a step to fire the raw material mixture powder.

In consequence, a primary object of the present invention is to provide cobalt oxyhydroxide particles having a high packing density and a small specific surface area.

In addition, a secondary object of the present invention is to provide lithium cobaltate particles having a high packing density and a small specific surface area and exhibiting a uniform crystal growth.

4

MEANS FOR SOLVING THE PROBLEM

The above objects of the present invention can be achieved by the following.

That is, according to the present invention, there are provided lithium cobaltate particles having an average secondary particle diameter (D50) of 15.0 to 25.0 $\mu$m, a BET specific surface area (BET) of 0.10 to 0.30 m$^2$/g, a compressed density (CD; as measured by applying a pressure of 2.5 t/cm$^2$ thereto) of 3.65 to 4.00 g/cm$^3$, and wherein in an X-ray diffraction pattern of the lithium cobaltate particles, an intensity ratio between a (003) plane and a (104) plane [I(104)/I(003)] of the lithium cobaltate particles is 0.70 to 1.20.

Preferably, a total content of alkalis in the lithium cobaltate particles is not more than 0.10% by weight, and a residual amount of $Co_3O_4$ in the the lithium cobaltate particles is not more than 1000 ppm.

Also, according to the present invention, there are provided cobalt oxyhydroxide particles having an average secondary particle diameter (D50) of 3.0 to 25.0 $\mu$m, a BET specific surface area (BET) of 0.1 to 20.0 m$^2$/g and a tap density (TD) of 1.0 to 3.5 g/cm$^3$ in which the average secondary particle diameter (D50) and the BET specific surface area (BET) of the cobalt oxyhydroxide particles satisfy the following relational formula 1:

```
(Relational Formula 1)

in case of D50 < 12, BET ≤ -12.536 x LN(D50) + 32.65, and

in case of D50 ≥ 12, BET ≤ 1.5.
```

Preferably, in the cobalt oxyhydroxide particles the crystallite size of the (003) plane is 300 to 700 Å, and the crystallite size of the (110) plane is 300 to 800 Å.

Also provided is a process for producing the cobalt oxyhydroxide particles of the invention, comprising the step of dropping a solution comprising a cobalt salt and an alkali solution into an aqueous solution at the same time to neutralize the solution comprising the cobalt salt, wherein the pH of the reaction solution is adjusted to the range of 12.0 to 13.0, and rapidly conducting an oxidation reaction of the cobalt salt by passing an oxygen-containing gas or a mixed gas of an oxygen-containing gas and a nitrogen-containing gas through the aqueous solution to thereby obtain the cobalt oxyhydroxide particles.

Preferably, the solution comprising the cobalt salt and the alkali solution are dropped into the aqueous solution filled in a reactor connected to a concentrator at the same time to neutralize the solution comprising the cobalt salt and rapidly conduct an oxidation reaction of the cobalt salt to thereby obtain a reaction slurry comprising cobalt oxyhydroxide particles; the reaction slurry obtained in the reactor is circulated between the reactor and the concentrator; and only sodium hydroxide is used as the alkali solution.

Also provided is a positive electrode comprising the lithium coboltate particles of the invention, a conductive agent and a binder.

Further provided is a non-aqueous electrolyte secondary battery comprising a positive electrode comprising the lithium cobaltate particles of the invention.

Also provided is the use of the lithium cobaltate particles of the invention as a positive electrode active substance in a non-aqueous electrolyte secondary battery.

EFFECT OF THE INVENTION

The cobalt oxyhydroxide particles according to the invention have a small BET specific surface area. As a result, it is expected that the lithium cobaltate particles produced from the cobalt oxyhydroxide particles can be prevented from causing battery swelling owing to a positive electrode obtained therefrom.

Further, the cobalt oxyhydroxide particles according to the invention have a large tap density. As a result, it is expected that the lithium cobaltate particles produced from the cobalt oxyhydroxide particles are enhanced in density.

In addition, the cobalt oxyhydroxide particles according to the invention have a well-controlled crystallite size ratio on specific diffraction planes thereof, so that it is expected that the cobalt oxyhydroxide particles exhibit a uniform crystal growth. As a result, it is expected that the lithium cobaltate particles produced from the cobalt oxyhydroxide particles are improved in rate characteristics and cycle characteristics.

Also, in the process for producing the cobalt oxyhydroxide particles according to the invention, the cobalt oxyhydroxide particles having excellent properties can be obtained without using ammonia. Therefore, the production process has a less burden on environment.

The lithium cobaltate particles according to the invention have a small BET specific surface area. Therefore, when forming an electrode of a secondary battery using the lithium cobaltate particles, it is expected that the resulting battery is prevented from suffering from battery swelling owing to the positive electrode and improved in thermal stability.

Also, the lithium cobaltate particles according to the invention have a large compressed density. Therefore, it is expected that an electrode obtained from the lithium cobaltate particles is enhanced in electrode density and exhibits a high capacity.

Further, the lithium cobaltate particles according to the invention have a well-controlled peak intensity ratio on specific diffraction planes thereof and are therefore expected to exhibit a uniform crystal growth. As a result, it is expected that an electrode obtained from the lithium cobaltate particles is improved in rate characteristics and cycle characteristics.

In addition, in the process for producing the lithium cobaltate particles according to the invention, by using the cobalt oxyhydroxide particles of the invention as a precursor thereof, it is possible to obtain the lithium cobaltate particles having excellent properties.

BRIEF DESCRIPTION OF THE DRAWINGS

FIG. 1 is an X-ray diffraction pattern of the cobalt oxyhydroxide particles obtained in Example 1-1.

FIG. 2 is an electron micrograph (SEM) of the cobalt oxyhydroxide particles obtained in Example 1-1 (x 3500 times).

FIG. 3 is an electron micrograph (SEM) of the cobalt oxyhydroxide particles obtained in Comparative Example 1-4 (x 3500 times).

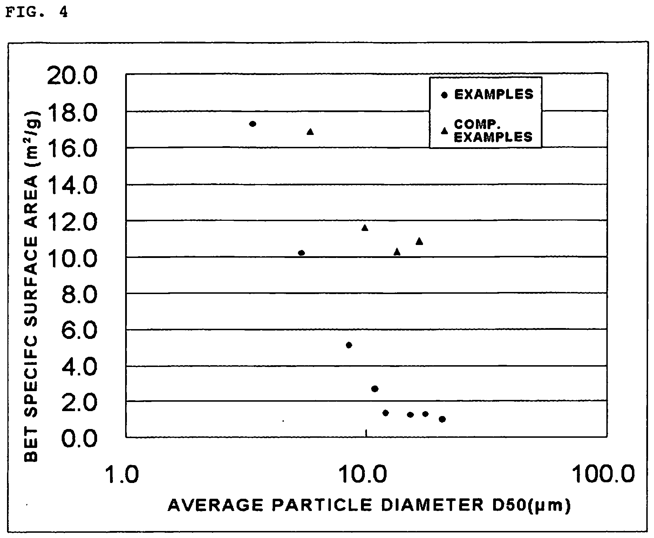

FIG. 4 is a graph showing a relationship between an average secondary particle diameter (D50) and a specific surface area (BET) of the cobalt oxyhydroxide particles.

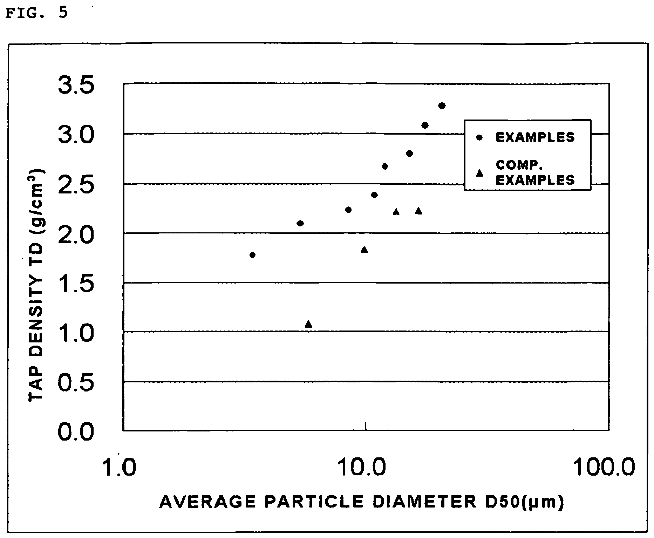

FIG. 5 is a graph showing a relationship between an average secondary particle diameter (D50) and a tap density (TD) of the cobalt oxyhydroxide particles.

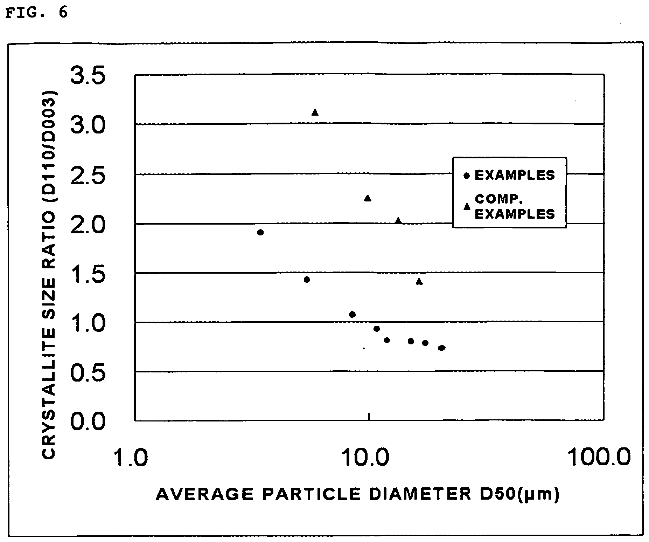

FIG. 6 is a graph showing a relationship between an average secondary particle diameter (D50) and a crystallite size ratio (D110/D003) of the cobalt oxyhydroxide particles.

FIG. 7 is an X-ray diffraction pattern of the lithium cobaltate particles obtained in Example 2-1.

FIG. 8 is an electron micrograph (SEM) of the lithium cobaltate particles obtained in Example 2-1 (x 5000 times).

FIG. 9 is an X-ray diffraction pattern of the lithium cobaltate particles obtained in Comparative Example 2-1.

FIG. 10 is an electron micrograph (SEM) of the lithium cobaltate particles obtained in Comparative Example 2-1 (x 5000 times).

PREFERRED EMBODIMENT FOR CARRYING OUT THE INVENTION

The cobalt oxyhydroxide particles and the process for producing the cobalt oxyhydroxide particles according to the invention are first explained in detail below.

First, the cobalt oxyhydroxide particles ($CoOOH$) according to the invention are described.

The cobalt oxyhydroxide particles of the present invention have an average secondary particle diameter (D50) of 3.0 to 25.0 $\mu$m. When the average secondary particle diameter (D50) is less than 3.0 $\mu$m, it may be difficult to aggregate the particles, and the resulting aggregated particles, if aggregated, tend to have a very low density. When the average secondary particle diameter (D50) is more than 25.0 $\mu$m, a positive electrode formed from lithium cobaltate particles obtained using the cobalt oxyhydroxide particles tends to suffer from breakage, bending, release of particles therefrom and exposure of particles thereon depending upon a thickness of the electrode. In particular, in view of the electrode density, the average secondary particle diameter (D50) of the cobalt oxyhydroxide particles is preferably 8.0 to 25.0 $\mu$m, more preferably 15.0 to 25.0 $\mu$m and still more preferably 17.0 to 24.0 $\mu$m.

The cobalt oxyhydroxide particles of the present invention have a BET specific surface area (BET) of 0.1 to 20.0 $m^2$/g. It may be very difficult to practically produce cobalt oxyhydroxide particles having a BET specific surface area of less than 0.1 $m^2$/g. When the BET specific surface area of the cobalt oxyhydroxide particles is more than 20.0 $m^2$/g, it may be difficult to obtain lithium cobaltate having a specific surface area as aimed therefrom, and further when an electrode (positive electrode) is formed from the lithium cobaltate, the resulting battery tends to hardly exhibit excellent cycle characteristics and may fail to suppress occurrence of battery swelling. The BET specific surface area of the cobalt oxyhydroxide particles is more preferably 0.1 to 10.0 0 $m^2$/g and still more preferably 0.2 to 5.0 $m^2$/g.

In the present invention, the average secondary particle diameter (D50) and the BET specific surface area (BET) of the cobalt oxyhydroxide satisfy the following relational formula 1.

(Relational Formula 1)

in case of D50 < 12, BET ≤ -12.536 x LN(D50) + 32.65, and

in case of D50 ≥ 12, BET ≤ 1.5.

In the present invention, when the relationship between the average secondary particle diameter (D50) and the BET specific surface area (BET) of the cobalt oxyhydroxide particles is out of the above-specified range expressed by the relational formula 1, the lithium cobaltate obtained from the cobalt oxyhydroxide particles may fail to exhibit a specific surface area as aimed. In addition, when an electrode (positive electrode) is formed from the lithium cobaltate, the resulting battery tends to hardly exhibit excellent cycle characteristics and may fail to suppress occurrence of battery swelling.

The cobalt oxyhydroxide particles of the present invention have a tap density (TD) of 1.0 to 3.5 g/cm$^3$. When the tap density of the cobalt oxyhydroxide particles is less than 1.0 g/cm$^3$, the lithium cobaltate obtained therefrom may fail to exhibit a high compressed density and a high electrode (positive electrode) density as aimed. Even though the tap density of the cobalt oxyhydroxide particles is more than 3.5 g/cm$^3$, there will occur no significant problems. However, it may be difficult to practically produce such cobalt oxyhydroxide particles having a tap density of more than 3.5 g/cm$^3$. The tap density of the cobalt oxyhydroxide particles is more preferably 2.0 to 3.5 g/cm$^3$ and still more preferably 2.5 to 3.5 g/cm$^3$.

In the present invention, the average secondary particle diameter (D50) and the tap density (TD) of the cobalt oxyhydroxide particles preferably satisfy the following relational formula 2.

(Relational Formula 2)

in case of D50 < 17, TD ≥ 1.627 x LN(D50) -1.65, and

in case of D50 ≥ 17, TD ≥ 3.0.

In the present invention, when the relationship between the average secondary particle diameter (D50) and the tap density (TD) of the cobalt oxyhydroxide particles is out of the above-specified range expressed by the relational formula 2, the lithium cobaltate obtained from the cobalt oxyhydroxide particles may fail to exhibit a high compressed density and a high electrode (positive electrode) density as aimed.

In the X-ray diffraction pattern of the cobalt oxyhydroxide particles according to the present invention, a crystallite size ratio between a (110) plane and a (003) plane thereof (D110/D003) is preferably 0.50 to 2.00. When the crystallite size ratio of the cobalt oxyhydroxide particles is more than 2.00, the cobalt oxyhydroxide particles tend to have a small primary particle thickness and a large specific surface area, and the lithium cobaltate obtained from the cobalt oxyhydroxide particles tend to undergo undesirable crystal growth in the direction of an ab axis thereof, so that it may be difficult to insert Li thereinto and desorb Li therefrom. As a result, the resulting battery tends to be deteriorated in cycle characteristics. When the crystallite size ratio of the cobalt oxyhydroxide particles is less than 0.50, the cobalt oxyhydroxide particles tends to have an excessively large primary particle thickness or an excessively large crystallite size, so that the secondary particles thereof tend to suffer from distortion of a particle shape, and the lithium cobaltate obtained from the cobalt oxyhydroxide particles may fail to exhibit a well-balanced relationship between a particle size and a compressed density thereof. The crystallite size ratio (D110/D003) of the cobalt oxyhydroxide particles is more preferably 0.60 to 1.95.

In the present invention, the average secondary particle diameter (D50) and the crystallite size ratio (D110/D003) of the cobalt oxyhydroxide particles preferably satisfy the following relational formula 3.

(Relational Formula 3)

in case of D50 < 12, D110/D003 ≤ -1.083 x LN(D50) + 3.65, and

in case of D50 ≥ 12, D110/D003 ≤ 1.00.

In the present invention, when the relationship between the average secondary particle diameter (D50) and the crystallite size ratio (D110/D003) of the cobalt oxyhydroxide particles is out of the above-specified range expressed by the relational formula 3, the lithium cobaltate obtained from the cobalt oxyhydroxide particles may fail to exhibit a high compressed density and a high electrode (positive electrode) density as aimed.

The crystallite size of a (003) plane of the cobalt oxyhydroxide particles according to the present invention is preferably 300 to 700 Å. When the crystallite size of a

(003) plane of the cobalt oxyhydroxide particles is less than 300 Å, the cobalt oxyhydroxide particles tend to have a small primary particle thickness and a large specific surface area, and the lithium cobaltate obtained from the cobalt oxyhydroxide particles tends to undergo undesirable crystal growth in the direction of an ab axis thereof, so that it may be difficult to insert Li thereinto and desorb Li therefrom. As a result, the resulting battery tends to be undesirably deteriorated in cycle characteristics. Thus, since the cobalt oxyhydroxide particles having a crystallite size of a (003) plane of less than 300 Å tend to have a small primary particle thickness and a large specific surface area, a crystal growth of the lithium cobaltate obtained from the cobalt oxyhydroxide particles tends to be undesirably caused along the direction of its ab axis. When the crystallite size of a (003) plane of the cobalt oxyhydroxide particles is more than 700 Å, the cobalt oxyhydroxide particles tend to have an excessively large primary particle thickness or an excessively large crystallite size, so that the secondary particles thereof tend to suffer from distortion of a particle shape, and the lithium cobaltate obtained from the cobalt oxyhydroxide particles may fail to exhibit a well-balanced relationship between a particle size and a compressed density thereof. The crystallite size of a (003) plane of the cobalt oxyhydroxide particles is more preferably 320 to 670 Å.

The crystallite size of a (110) plane of the cobalt oxyhydroxide particles according to the present invention is preferably 300 to 800 Å. When the crystallite size of a (110) plane of the cobalt oxyhydroxide particles is less than 300 Å, the cobalt oxyhydroxide particles tend to have a small primary particle thickness and a large specific surface area, and the lithium cobaltate obtained from the cobalt oxyhydroxide particles tends to undergo undesirable crystal growth in the direction of its ab axis, so that it may be difficult to insert Li thereinto and desorb Li therefrom. As a result, the resulting battery tends to be undesirably deteriorated in cycle characteristics. Thus, since the cobalt oxyhydroxide particles having a crystallite size of a (110) plane of less than 300 Å tend to have a small primary particle thickness and a large specific surface area, a crystal growth of the lithium cobaltate obtained from the cobalt oxyhydroxide particles tends to be undesirably caused along the direction of its ab axis. When the crystallite size of a (110) plane of the cobalt oxyhydroxide particles is more than 800 Å, the cobalt oxyhydroxide particles tend to have an excessively large primary particle thickness or an excessively large crystallite size, so that the secondary particles thereof tend to suffer from distortion of a particle shape, and the lithium cobaltate obtained from the cobalt oxyhydroxide particles may fail to exhibit a well-balanced relationship between a particle size and a compressed density thereof. The crystallite size of a (110) plane of the cobalt oxyhydroxide particles is more preferably 400 to 700 Å.

Next, the process for producing the cobalt oxyhydroxide particles according to the present invention is described.

The cobalt oxyhydroxide particles of the present invention are produced by dropping a solution comprising a cobalt salt and an alkali solution to an aqueous solution to instantaneously conduct a neutralization reaction of the solution comprising the cobalt salt and then rapidly conduct an oxidation reaction of the cobalt salt.

Examples of the alkali solution include aqueous solutions of sodium hydroxide, potassium hydroxide, and sodium carbonate. Among these alkali solutions, a sodium hydroxide aqueous solution, a sodium carbonate aqueous solution or a mixed solution thereof is preferably used. Meanwhile, the use of an ammonia solution as the alkali solution is undesirable from the viewpoint of environmental burden.

The amount of the alkali solution added for the neutralization reaction may be 1.0 equivalent per equivalent of components to be neutralized which are contained in the whole metal salts. However, the alkali solution is preferably added in an excessive amount in order to well adjust the pH value of the reaction solution.

The pH of the reaction solution is suitably adjusted to the range of 12.0 to 13.0. When the pH of the reaction solution is less than 11.0, it may be difficult to aggregate the primary to form secondary particles thereof, or fine particles tend to be undesirably produced so that the number of particles in the reaction solution tends to be undesirably increased. When the pH of the reaction solution is more than 13.0, the primary particles tend to suffer from plate-shaped crystal growth, so that the secondary particles tend to be less dense, and tend to be undesirably deteriorated in packing density.

As the cobalt salt, there may be suitably used cobalt sulfate, cobalt nitrate, cobalt acetate and cobalt carbonate. Among these cobalt salts, cobalt sulfate is preferably used.

Also, the dropping rate (m value) of the cobalt solution is preferably controlled to 0.005 to 0.300 mol/(L·h). The unit represents a molar concentration of cobalt to be dropped per a reaction solution volume of 1 L and a reaction time of 1 hr. Further, in order to stabilize a concentration of the salt, sodium sulfate may be previously incorporated into the reaction mother solution. The dropping rate (m value) of the cobalt solution is more preferably 0.010 to 0.280 mol/(L·h).

The oxidation reaction is conducted by passing an oxygen-containing gas or a mixed gas of the oxygen-containing gas and a nitrogen-containing gas. The oxygen-containing gas is preferably passed through an inside of a draft tube or from a lower portion of the reactor.

The reaction temperature is preferably not lower than 30°C and more preferably 30 to 70°C.

Different kinds of metals such as Mg, Al, Ti, Zr, Ni, Mn and Sn may also be added in a very small amount if required. In this case, the metals may be added by any suitable method such as a method of previously mixing these metals with the cobalt salt, a method of adding these metals together with the cobalt salt at the same time, and a method of adding these metals to the reaction solution in the course of the reaction.

In the present invention, the solution comprising the cobalt salt and the alkali solution are preferably simultaneously dropped into the aqueous solution filled in a reactor connected to a concentrator to neutralize the solution comprising the cobalt salt and rapidly conduct an oxidation reaction of the cobalt salt to thereby obtain a reaction slurry comprising cobalt oxyhydroxide particles, and the reaction slurry thus produced in the reactor is preferably circulated between the reactor and the concentrator. For this reason, as the reaction apparatus, there is preferably used the reactor equipped with a baffle and a draft tube as well as the concentrator as an external device, and the reaction slurry is preferably subjected to line circulation between the reactor and the concentrator.

The amount of the reaction slurry to be circulated between the reactor and the concentrator is preferably controlled to such an extent that the stirring condition of the reactor is kept unchanged. The concentration procedure is preferably conducted at a rate capable of filtering the raw material solution to be dropped without delay. The filtering method may be either a continuous method or an intermittent method.

The reaction time varies depending upon the particle size as aimed and is therefore not particularly limited. Also, the upper limit of a concentration of the reaction solution is not particularly limited as long as the reaction slurry is free from deposition within conduits owing to its properties such as viscosity, and the facility can be stably operated without clogging. In practice, the upper limit of a concentration of the reaction solution is preferably about 20 mol/L.

Next, the lithium cobaltate particles which are produced by using the cobalt oxyhydroxide particles of the present invention are described.

The lithium cobaltate particles produced by using the cobalt oxyhydroxide particles of the present invention have an average secondary particle diameter of 15.0 to 25.0 $\mu$m and a BET specific surface area of 0.10 to 0.30 $m^2$/g.

The lithium cobaltate particles produced by using the cobalt oxyhydroxide particles of the present invention can be produced by mixing the above cobalt oxyhydroxide particles of the present invention with a lithium compound according to an ordinary method, and heat-treating the resulting mixture in a temperature range of 600 to 1100°C.

The mixing treatment of the cobalt oxyhydroxide particles of the present invention and the lithium compound may be conducted by either a dry method or a wet method as long as these materials can be uniformly mixed with each other. As the lithium compound, there may be used either lithium hydroxide or lithium carbonate. Among these lithium compounds, lithium carbonate is preferably used.

The mixing ratio of lithium to a total mole number of cobalt in the cobalt oxyhydroxide particles of the present invention is preferably 0.95 to 1.05.

If required, different kinds of metals such as Mg, Al, Ti, Zr and Sn may be added in a very small amount.

Next, the positive electrode using the positive electrode active substance according to the present invention is described.

When producing the positive electrode using the positive electrode active substance according to the present invention, a conductive agent and a binder are added to and mixed with the positive electrode active substance by an ordinary method. Examples of the preferred conductive agent include acetylene black, carbon black and graphite. Examples of the preferred binder include polytetrafluoroethylene and polyvinylidene fluoride.

The secondary battery produced by using the positive electrode active substance according to the present invention comprises the above positive electrode, a negative electrode and an electrolyte.

Examples of a negative electrode active substance which may be used for production of the negative electrode include metallic lithium, lithium/aluminum alloys, lithium/tin alloys, and graphite or black lead.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving lithium phosphate hexafluoride as well as at least one lithium salt selected from the group consisting of lithium perchlorate and lithium borate tetrafluoride in the above solvent.

<Function>

The most important point of the present invention resides in that lithium cobaltate particles having a small specific surface area and a high compressed density can be obtained by using cobalt oxyhydroxide having a small specific surface area and a high tap density as a precursor of the lithium cobaltate particles, and an electrode (positive electrode) formed from the lithium cobaltate particles can exhibit a high density and a high capacity, so that the resulting battery has a good thermal stability, undergoes less battery swelling, and exhibits excellent cycle characteristics.

In particular, it is suggested by the present inventors that when a crystal growth of $LiCoO_2$ is controlled by adjusting properties of the precursor and calcining conditions thereof, the $LiCoO_2$ crystals can be isotropically grown with smooth diffusion of Li from the ab axis, so that the resulting battery can be improved in cycle characteristics.

Next, the lithium cobaltate particles ($LiCoO_2$) according to the present invention are described.

The lithium cobaltate particles of the present invention have an average secondary particle diameter (D50) of 15.0 to 25.0 $\mu$m. When the average secondary particle diameter (D50) is less than 15.0 $\mu$m, the lithium cobaltate particles tend to have a low compressed density, so that an electrode (positive electrode) formed from the lithium cobaltate particles tends to have a very low density. When the average secondary particle diameter (D50) is more than 25.0 $\mu$m, the electrode formed from the lithium cobaltate particles tends to suffer from breakage, bending, release of particles therefrom and exposure of particles thereon depending upon a thickness of the electrode. The average secondary particle diameter (D50) of the lithium cobaltate particles is preferably 15.0 to 23.0 $\mu$m and more preferably 15.5 to 20.0 $\mu$m.

The lithium cobaltate particles of the present invention have a BET specific surface area (BET) of 0.10 to 0.30 $m^2$/g. It may be difficult to practically produce lithium cobaltate particles having a BET specific surface area of less than 0.10 $m^2$/g. When the BET specific surface area of the lithium cobaltate particles is more than 0.30 $m^2$/g, an electrode (positive electrode) formed from the lithium cobaltate tends to hardly exhibit excellent cycle characteristics and may fail to suppress occurrence of battery swelling. The BET specific surface area of the lithium cobaltate particles is more preferably 0.10 to 0.25 $m^2$/g.

The lithium cobaltate particles of the present invention have a compressed density (CD: as measured by applying a pressure of 2.5 t/cm$^2$ thereto) of 3.65 to 4.00 g/cm$^3$. When the compressed density of the lithium cobaltate particles is less than 3.65 g/cm$^3$, the lithium cobaltate particles may fail to provide an electrode (positive electrode) having a high electrode density as aimed. Even though the compressed density of the lithium cobaltate particles is more than 4.00 g/cm$^3$, there will occur no significant problems. However, the electrode formed from such lithium cobaltate particles tends to be insufficient in penetration of an electrolyte solution thereinto, and it may be difficult to practically produce such lithium cobaltate particles. The compressed density of the lithium cobaltate particles is more preferably 3.70 to 3.95 g/cm$^3$.

In the X-ray diffraction pattern of the lithium cobaltate particles according to the present invention, the intensity ratio between a (003) plane and a (104) plane [I(104)/I(003)] is 0.70 to 1.20. Even though the intensity ratio is more than 1.20, there will be caused no significant problems. However, it may be difficult to practically produce such lithium cobaltate particles. When the intensity ratio is less than 0.70, a crystal growth of the lithium cobaltate particles tends to be caused along the direction of an ab axis thereof, and it may be difficult to insert Li thereinto and desorb Li therefrom, so that the resulting battery tends to be deteriorated in cycle characteristics. The intensity ratio [I(104)/I(003)] is preferably 0.70 to 1.15 and more preferably 0.75 to 1.10.

The total content of alkalis in the lithium cobaltate particles according to the present invention is preferably not more than 0.10% by weight. When the total content of alkalis in the lithium cobaltate particles is more than 0.10% by weight, the battery using an electrode (positive electrode) formed from the lithium cobaltate particles tends to suffer from battery swelling. The total content of alkalis in the lithium cobaltate particles is more preferably 0.001 to 0.08% by weight.

The residual amount of $Co_3O_4$ in the lithium cobaltate particles according to the present invention is preferably not more than 1000 ppm. When the residual amount of $Co_3O_4$ in the lithium cobaltate particles is more than 1000 ppm, the battery using an electrode (positive electrode) formed from the lithium cobaltate particles tends to suffer from OCV defects. The residual amount of $Co_3O_4$ in the lithium cobaltate particles is more preferably 10 to 800 ppm.

Next, the process for producing the lithium cobaltate particles according to the invention is described.

The lithium cobaltate particles of the present invention can be produced by mixing the cobalt oxyhydroxide particles with a lithium compound such that the amount of lithium is 1.00 to 1.02 mol per 1 mol of cobalt (including different kinds of metals), and heat-treating the resulting mixture in a temperature range of 600 to 1100°C.

The mixing treatment of the cobalt oxyhydroxide particles and the lithium compound in the present invention may be conducted by either a dry method or a wet method as long as these materials can be uniformly mixed with each other.

As the lithium compound, there may be used either lithium hydroxide or lithium carbonate. Among these lithium compounds, lithium carbonate is preferably used.

If required, different kinds of metals such as Mg, Al, Ti, Zr, Ni, Mn and Sn may be added in a very small amount.

When the heat-treating temperature of the mixture of the cobalt oxyhydroxide particles and the lithium compound is lower than 600°C, a low-temperature phase $LiCoO_2$ having a pseudo-spinel structure tends to be undesirably produced. When the heat-treating temperature is higher than 1100°C, a high-temperature irregular phase $LiCoO_2$ in which lithium and cobalt are located at random positions tends to be undesirably produced. The atmosphere used upon the calcination is preferably an oxidative gas atmosphere. The reaction time is preferably 5 to 20 hr.

The cobalt oxyhydroxide particles according to the present invention are described below.

The cobalt oxyhydroxide particles of the present invention are preferably such cobalt oxyhydroxide particles which are obtained by dropping a solution comprising a cobalt salt and an alkali solution into an aqueous solution to instantaneously conduct a neutralization reaction of the solution comprising the cobalt salt and then rapidly conduct an oxidation reaction of the cobalt salt. More specifically, the cobalt oxyhydroxide particles according to the invention are basically preferably used as the above cobalt oxyhydroxide particles. The cobalt oxyhydroxide particles can be produced by the process defined in claims 5 and 6.

The cobalt oxyhydroxide particles which are more preferred as the precursor of the lithium cobaltate particles have an average secondary particle diameter (D50) of 15.0 to 25.0 $\mu$m, a BET specific surface area (BET) of 0.1 to 20.0 m$^2$/g, a tap density (TD) of 1.0 to 3.5 g/cm$^3$, and a crystallite size ratio between a (110) plane and a (003) plane (D110/D003) of 0.50 to 2.00 as measured in an X-ray pattern thereof and a crystallite size of a (003) plane of 300 to 700 Å, and satisfy the above relational formulae 1 to 3.

Next, the positive electrode obtained using the positive electrode active substance comprising the lithium cobaltate particles according to the present invention is described.

When producing the positive electrode using the positive electrode active substance according to the present invention, a conductive agent and a binder are added to and mixed with the positive electrode active substance by an ordinary method. Examples of the preferred conductive agent include acetylene black, carbon black and graphite. Examples of the preferred binder include polytetrafluoroethylene and polyvinylidene fluoride.

The secondary battery produced by using the positive electrode active substance according to the present invention comprises the above positive electrode, a negative electrode and an electrolyte.

Examples of a negative electrode active substance which may be used for production of the negative electrode include metallic lithium, lithium/aluminum alloys, lithium/tin alloys, and graphite or black lead.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving lithium phosphate hexafluoride as well as at least one lithium salt selected from the group consisting of lithium perchlorate and lithium borate tetrafluoride in the above solvent.

The positive electrode produced from the lithium cobaltate particles of the present invention according to the below-mentioned method preferably has an electrode density of 3.5 to 4.0 g/cm$^3$.

When the secondary battery is produced using the lithium cobaltate particles of the present invention, the percentage of weight reduction (weight reduction rate) of the lithium cobaltate particles which are removed from the secondary battery after being charged is preferably not more than 1.0%.

<Function>

The most important point of the present invention resides in that the lithium cobaltate particles having a small specific surface area and a high compressed density can be obtained by using a lithium cobaltate precursor having a small specific surface area and a high compressed density, and an electrode (positive electrode) formed from the lithium cobaltate particles can exhibit a high density and a high capacity, so that the resulting battery has a good thermal stability, undergoes less battery swelling, and exhibits excellent cycle characteristics.

In particular, it is suggested by the present inventors that when a crystal growth of LiCoO$_2$ is controlled by adjusting properties of the precursor and calcining conditions thereof, the LiCoO$_2$ crystals are isotropically grown with smooth diffusion of Li from an ab axis thereof, so that the resulting battery can be improved in cycle characteristics.

EXAMPLES

Typical examples of the present invention are described in more detail below.

First, Examples 1-1 to 1-8 and 1-1-1, Comparative Examples 1-1 to 1-4 and Reference Example 1-1-1 are described. The evaluation methods used in Examples 1-1 to 1-8 and 1-1-1, Comparative Examples 1-1 to 1-4 and Reference Example 1-1-1 are as follows.

The particle shape of the cobalt oxyhydroxide particles was observed using a scanning electron microscope "SEM-EDX" equipped with an energy disperse type X-ray analyzer (manufactured by Hitachi High-Technologies Corp.).

The average secondary particle diameter and a frequency of a volume median particle diameter of the cobalt oxyhydroxide particles were measured using a particle size distribution measuring apparatus "MICROTRACK HRA 9320-X100" manufactured by Nikkiso Co., Ltd.

The specific surface area of the cobalt oxyhydroxide particles was measured by BET method using "Macsorb HM model-1208" manufactured by Mountech Co., Ltd.

The tap density (TD) of the cobalt oxyhydroxide particles was determined as follows. That is, 40 g of a powder sample was packed into a 100 mL measuring cylinder and then tapped using "TAP DENSER KYT-3000" manufactured by Seishin Enterprise Co., Ltd., 300 times to measure a powder density thereof.

The identification of the cobalt oxyhydroxide particles was carried out using a powder X-ray diffractometer (manufactured by RIGAKU Corp.; Cu-K$\alpha$; 40 kV; 40 mA). Also, the crystallite sizes ((D110) plane and (D003) plane) were calculated from various diffraction peaks observed in the above powder X-ray diffraction.

<Positive Electrode Active Substance>

The compressed density of the lithium cobaltate particles was determined as follows. That is, 10 g of the sample particles were weighed and placed in a cylindrical metal mold, and then pressed by applying a pressure of 2.5 t/cm$^2$ thereto using a table press "RIKEN S1-150". The compressed density of the lithium cobaltate particles was calculated from a volume of the particles after pressed.

Battery characteristics of the positive electrode active substance were evaluated as follows. That is, the positive electrode, negative electrode and electrolyte solution were prepared by the following method to produce a coin cell.

<Production of Positive Electrode>

The positive electrode active substance, acetylene black and graphite both serving as a conductive agent, and polyvinylidene fluoride as a binder, were accurately weighed such that the weight ratio therebetween was 93:3:4, and dispersed in N-methyl pyrrolidone, and the resulting dispersion was fully mixed using a high-speed kneader to prepare a compounding agent slurry for the positive electrode. The thus prepared slurry was applied onto an aluminum foil as a current collector using a 150 $\mu$m doctor blade, and dried at 120°C. The resulting dried sheet was blanked into a 16 mm$\phi$ disk shape to produce a positive electrode plate.

<Production of Negative Electrode>

A metallic lithium foil was blanked into a 16 mm$\phi$ disk shape to produce a negative electrode.

<Preparation of Electrolyte Solution>

A mixed solution comprising ethylene carbonate and diethyl carbonate at a volume ratio of 30:70 was mixed with 1 mol/L of lithium phosphate hexafluoride (LiPF$_6$) as an electrolyte to prepare an electrolyte solution.

<Assembly of Coin Cell>

In a glove box placed in an argon atmosphere, the above positive electrode and negative electrode were disposed in a SUS316L casing through a polypropylene separator, and the electrolyte solution was filled in the casing to produce a coil cell of CR2032 type.

<Evaluation of Cell>

The coin cell thus produced was subjected to charge/discharge test for secondary batteries. The measuring conditions were as follows. That is, the coin cell was subjected to the 1st charge/discharge cycle at 1/10 C and then repeatedly to 2nd and subsequent charge/discharge cycles at 1 C until reaching 11th charge/discharge cycle, under the condition of a cut-off voltage between 3.0 V and 4.3 V to determine respective charge/discharge capacities.

Example 1-1:

<Production of cobalt oxyhydroxide particles>

A reactor having an effective capacity of 10 L equipped with a draft tube, a baffle and a vane-type stirrer was filled with 8 L of ion-exchanged water. While fully stirring, a temperature within the reactor was adjusted to 50°C, and a sufficient amount of an oxygen-containing gas was allowed to pass through the reactor from a lower portion thereof, and then a 4 mol/L sodium hydroxide aqueous solution was dropped into the reactor such that the pH value of the solution in the reactor was adjusted to 12.5. A 1.5 mol/L cobalt sulfate aqueous solution was continuously supplied to the reactor at an average feed rate of 0.025 mol/(L·hr). At the same time, a 4 mol/L sodium hydroxide aqueous solution was continuously supplied to the reactor such that the pH value of the reaction solution in the reactor was adjusted to 12.5. As a result, cobalt oxyhydroxide particles produced by the rapid oxidation reaction were overflowed from an upper portion of the reactor, and then concentrated in a 0.4 L concentrator connected to an overflow pipe from the reactor. The resulting concentrated reaction solution was circulated to the reactor where the reaction was conducted until the concentration of the cobalt oxyhydroxide particles in the reaction solution within the reactor reached 15 mol/L.

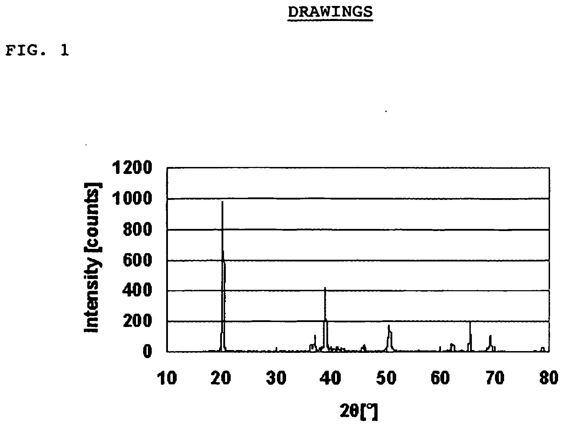

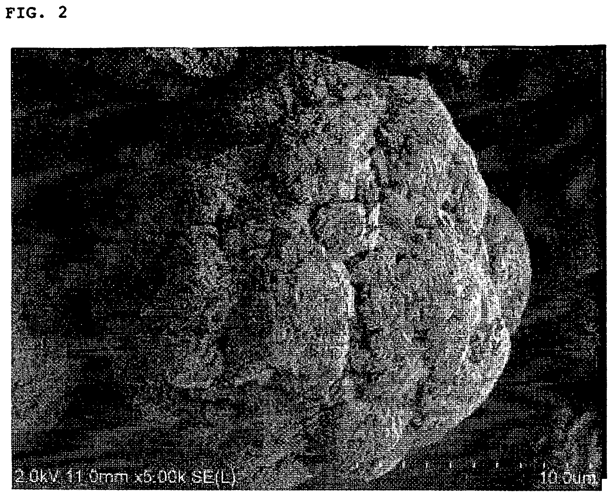

After completion of the reaction, the resulting suspension was withdrawn from the reactor and washed with water using a filter press, and then the obtained filter cake was dried, thereby obtaining cobalt oxyhydroxide particles. As a result of subjecting the thus obtained cobalt oxyhydroxide particles to XRD analysis, it was confirmed that the cobalt oxyhydroxide particles were constituted from a cobalt oxyhydroxide single phase (FIG. 1), and had D50 of 17.6 $\mu$m, a frequency of a volume median particle diameter of 9.7%, a specific surface area BET of 1.26 m$^2$/g, a tap density TD of 3.08 g/cm$^3$, D003 of 602 Å, D110 of 470 Å, and D110/D003 of 0.78. The SEM micrograph of the thus obtained cobalt oxyhydroxide particles is shown in FIG. 2.

Examples 1-2 to 1-8 and Comparative Examples 1-1 to 1-4:

The same procedure as defined in Example 1-1 was conducted except that the reaction temperature, pH, cobalt feed rate and reaction time were variously changed, thereby obtaining cobalt oxyhydroxide particles.

The production conditions used above are shown in Table 1, and various properties of the thus obtained cobalt oxyhydroxide particles are shown in Table 2.

## Table 1

| | Production conditions of cobalt oxyhydroxide particles | | |
|---|---|---|---|
| | m value (mol/L·hr) | Temperature (°C) | Co concentration (mol/L) |
| Example 1-1 | 0.025 | 50 | 1.5 |
| Example 1-2 | 0.100 | 50 | 1.5 |
| Example 1-3 | 0.100 | 50 | 1.5 |
| Example 1-4 | 0.050 | 50 | 1.5 |
| Example 1-5 | 0.050 | 50 | 1.5 |
| Example 1-6 | 0.025 | 50 | 1.5 |
| Example 1-7 | 0.025 | 50 | 1.5 |
| Example 1-8 | 0.010 | 50 | 1.5 |
| Comparative Example 1-1 | 0.100 | 50 | 1.5 |
| Comparative Example 1-2 | 0.050 | 50 | 1.5 |
| Comparative Example 1-3 | 0.025 | 50 | 1.5 |
| Comparative Example 1-4 | 0.025 | 50 | 1.5 |

Table 1 (continued)

| | Production conditions of cobalt oxyhydroxide particles | | |
|---|---|---|---|
| | NaOH concentration (mol/L) | pH (-) | Reaction concentration (mol/L) |
| Example 1-1 | 4 | 12.5 | 15 |
| Example 1-2 | 4 | 12.5 | 15 |
| Example 1-3 | 4 | 12.8 | 15 |
| Example 1-4 | 4 | 12.5 | 10 |
| Example 1-5 | 4 | 12.5 | 15 |
| Example 1-6 | 4 | 12.5 | 10 |
| Example 1-7 | 4 | 12.5 | 12 |
| Example 1-8 | 4 | 12.5 | 15 |
| Comparative Example 1-1 | 4 | 13.5 | 15 |
| Comparative Example 1-2 | 4 | 13.5 | 10 |
| Comparative Example 1-3 | 4 | 13.5 | 10 |
| Comparative Example 1-4 | 4 | 13.5 | 15 |

Table 2

| | Properties of cobalt oxyhydroxide particles | | |
|---|---|---|---|
| | D50 (μm) | Frequency (%) | BET (m²/g) |
| Example 1-1 | 17.6 | 9.7 | 1.26 |
| Example 1-2 | 3.4 | 22.0 | 17.27 |
| Example 1-3 | 5.4 | 18.1 | 10.20 |
| Example 1-4 | 8.5 | 17.5 | 5.10 |
| Example 1-5 | 10.8 | 16.4 | 2.68 |
| Example 1-6 | 12.0 | 9.7 | 1.34 |
| Example 1-7 | 15.2 | 9.5 | 1.23 |
| Example 1-8 | 20.6 | 9.2 | 0.97 |
| Comparative Example 1-1 | 5.8 | 15.0 | 16.90 |
| Comparative Example 1-2 | 9.8 | 16.3 | 11.63 |
| Comparative Example 1-3 | 13.4 | 14.5 | 10.30 |
| Comparative Example 1-4 | 16.5 | 13.5 | 10.90 |

Table 2 (continued)

| | Properties of cobalt oxyhydroxide particles | | |
|---|---|---|---|
| | < Relational formula 1 | TD (g/cm$^3$) | > Relational formula 2 |
| Example 1-1 | 1.50 | 3.08 | 3.00 |
| Example 1-2 | 17.31 | 1.78 | 0.34 |
| Example 1-3 | 11.60 | 2.10 | 1.08 |
| Example 1-4 | 5.87 | 2.23 | 1.83 |
| Example 1-5 | 2.83 | 2.38 | 2.22 |
| Example 1-6 | 1.50 | 2.67 | 2.39 |
| Example 1-7 | 1.50 | 2.80 | 2.78 |
| Example 1-8 | 1.50 | 3.28 | 3.00 |
| Comparative Example 1-1 | 10.61 | 1.08 | 1.21 |
| Comparative Example 1-2 | 4.00 | 1.83 | 2.07 |
| Comparative Example 1-3 | 1.50 | 2.22 | 2.57 |
| Comparative Example 1-4 | 1.50 | 2.23 | 2.91 |

Table 2 (continued)

| | Properties of cobalt oxyhydroxide particles | | | |
|---|---|---|---|---|
| | D003 (Å) | D110 (Å) | D110/D003 (-) | < Relational formula 3 |
| Example 1-1 | 602 | 470 | 0.78 | 1.00 |
| Example 1-2 | 354 | 676 | 1.91 | 2.32 |
| Example 1-3 | 427 | 610 | 1.43 | 1.83 |
| Example 1-4 | 517 | 552 | 1.07 | 1.34 |
| Example 1-5 | 589 | 546 | 0.93 | 1.07 |
| Example 1-6 | 674 | 548 | 0.81 | 1.00 |
| Example 1-7 | 611 | 490 | 0.80 | 1.00 |
| Example 1-8 | 668 | 487 | 0.73 | 1.00 |
| Comparative Example 1-1 | 332 | 1034 | 3.11 | 1.75 |
| Comparative Example 1-2 | 348 | 783 | 2.25 | 1.18 |
| Comparative Example 1-3 | 306 | 621 | 2.03 | 1.00 |
| Comparative Example 1-4 | 370 | 523 | 1.41 | 1.00 |

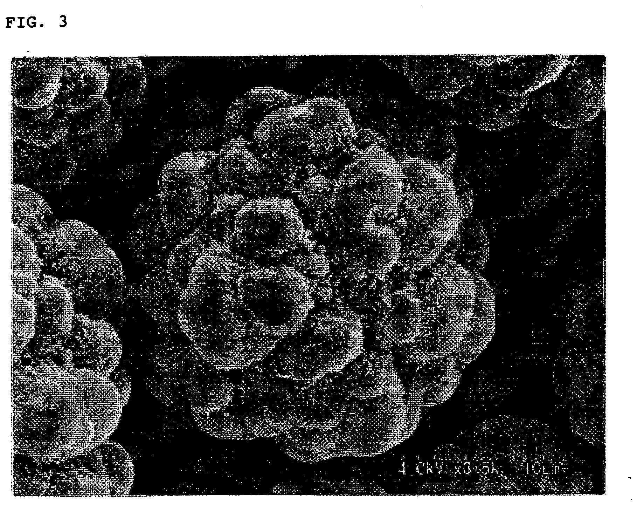

The SEM microphotograph of the cobalt oxyhydroxide particles obtained in Comparative Example 1-4 is shown in FIG. 3.

<Example 1-1-1>

<Production of Positive Electrode Active Substance>

The cobalt oxyhydroxide particles obtained in Example 1-1 and a lithium compound were intimately mixed with each other in such an amount that the molar ratio lithium/cobalt was 1.00, and the resulting mixed powder was calcined in an oxidative atmosphere at 1000°C for 10 hr, thereby obtaining lithium cobaltate particles.

As a result of subjecting the thus obtained lithium cobaltate particles to X-ray diffraction, it was confirmed that the obtained particles were constituted from only a lithium cobaltate single phase without any impurity phase. Also, it was confirmed that the lithium cobaltate particles had an average particle diameter of 15.5 $\mu$m, a frequency of a volume median particle diameter of 9.8%, a BET specific surface area of 0.20 m$^2$/g and a compressed density CD (as measured by applying a pressure of 2.5 ton/cm$^2$ thereto) of 3.75 cm$^3$.

Further, the coin cell produced by using the above positive electrode active substance had an electrode density of 3.70 g/cm$^3$, an initial efficiency of 96%, a rate characteristic (as measured at 1 c/0.1 c) of 95% and a capacity retention rate at the 11th cycle of 99%.

<Reference Example 1-1-1>

<Production of Positive Electrode Active Substance>

The cobalt oxyhydroxide particles obtained in Comparative Example 1-4 and a lithium compound were intimately mixed with each other in such an amount that the molar ratio lithium/cobalt was 1.00, and the resulting mixed powder was calcined in an oxidative atmosphere at 1000°C for 10 hr, thereby obtaining lithium cobaltate particles.

As a result of subjecting the thus obtained lithium cobaltate particles to X-ray diffraction, it was confirmed that the obtained particles were constituted from only a lithium cobaltate single phase without any impurity phase. Also, it was confirmed that the lithium cobaltate particles had an average particle diameter of 13.6 $\mu$m, a frequency of a volume median particle diameter of 9.4%, a BET specific surface area of 0.26 m$^2$/g and a compressed density CD (as measured by applying a pressure of 2.5 ton/cm$^2$ thereto) of 3.65 cm$^3$.

Further, the coin cell produced by using the above positive electrode active substance had an electrode density of 3.40 g/cm$^3$, an initial efficiency of 94%, a rate characteristic (as measured at 1 c/0.1 c) of 92% and a capacity retention rate at the 11th cycle of 90%.

Next, Examples 2-1 to 2-15 and Comparative Example 2-1 are described. The evaluation methods used in Examples 2-1 to 2-15 and Comparative Example 2-1 are as follows.

The particle shape of the lithium cobaltate particles was observed using a scanning electron microscope "SEM-EDX" equipped with an energy disperse type X-ray analyzer (manufactured by Hitachi High-Technologies Corp.).

The average secondary particle diameter (D50) and a frequency of a volume median particle diameter of the cobalt oxyhydroxide particles and those of the lithium cobaltate particles were respectively measured using a particle size distribution measuring apparatus "MICROTRACK HRA 9320-X100" manufactured by Nikkiso Co., Ltd.

The specific surface area of the cobalt oxyhydroxide particles and the specific surface area of the lithium cobaltate particles were respectively measured by BET method using "Macsorb HM model-1208" manufactured by Mountech Co., Ltd.

The compressed density (CD) of the lithium cobaltate particles was determined as follows. That is, 10 g of a sample was weighed and placed in a cylindrical metal mold, and then pressed by applying a pressure of 2.5 t/cm$^2$ thereto using a table press "RIKEN S1-150". The compressed density of the lithium cobaltate particles was calculated from a volume of the particles after pressed.

The tap density (TD) of the cobalt oxyhydroxide particles was determined as follows. That is, 40 g of a powder sample were packed into a 100 mL measuring cylinder and then tapped using "TAP DENSER KYT-3000" manufactured by Seishin Enterprise Co., Ltd., 300 times to measure a powder density thereof.

The identification of the lithium cobaltate particles was carried out using a powder X-ray diffractometer (manufactured by RIGAKU Corp.; Cu-K$\alpha$; 40 kV; 40 mA). Also, the intensity ratio ((104) plane and (003) plane) of the lithium cobaltate particles was calculated from the intensity values of a sample plate produced by the following method which were measured under the following conditions.

First, 30 g of a commercially available adhesive (such as "Cemedine") were dissolved in 70 g of an acetone solution to prepare a Cemedine solvent having a concentration of about 30%. Next, 1.5 g of the above Cemedine solvent were added to 2.0 g of the lithium cobaltate particles, and the obtained mixture was mixed using an agate mortar to form a slurry. Thereafter, the resulting slurry was poured to a glass sample plate, and an excessive amount of the slurry was removed by a knife, etc., before acetone was evaporated therefrom. At this time, care was taken such that the poured slurry was flushed with the glass plate. Finally, after completely evaporating acetone, the dried sample was subjected to XRD measurement.

The identification of the cobalt oxyhydroxide particles was also carried out using a powder X-ray diffractometer (manufactured by RIGAKU Corp.; Cu-K$\alpha$; 40 kV; 40 mA). Also, the crystallite sizes ((D110) plane and (D003) plane) were calculated from various diffraction peaks observed in the above powder X-ray diffraction.

The powder X-ray diffraction was conducted under the following conditions: measuring apparatus: "RINT" manufactured by Rigaku Corp.; tube used: Cu; tube voltage: 40 kV; tube current: 40 mA. Also, the intensity on the (003) plane was measured at an angle of 18.2 to 19.5°, and the intensity on the (104) plane was measured at an angle of 44.2 to 46.1°. Meanwhile, the measurement was conducted at a step angle of 0.002° and a scanning speed of 0.05°/min.

The residual amount of alkalis was determined from the value measured in terms of lithium carbonate according to Warder method.

Specifically, 10.0 g of a sample were dispersed in 50 mL of water for 1 hr, and then the obtained dispersion was allowed to stand for 1 hr to separate a supernatant liquid therefrom. The resulting supernatant liquid was titrated with hydrochloric acid. In the titration, lithium hydroxide and lithium carbonate were quantitatively determined by using phenolphthalein and bromophenol blue as an indicator, and the amounts of these lithium compounds all were obtained in terms of an amount of lithium carbonate.

The residual amount of $Co_3O_4$ was determined as follows. That is, 5.0 g of a sample were heated and dissolved using concentrated hydrochloric acid (35%) while passing a nitrogen gas through the sample to suppress oxidation thereof, and a small amount of ascorbic acid was added dropwise to the resulting solution to adjust a pH value of the solution to 5.0 to 6.0. Then, the obtained precipitate was removed from the reaction solution by filtration. After adjusting a pH value of the obtained filtrate to 3.0 to 4.0, the resulting reaction solution was titrated with EDTA (indicator: Cu-PAN) while heating the solution until being boiled to thereby conduct quantitative determination of a divalent cobalt therein. The amount of the divalent cobalt was expressed in terms of an amount of $Co_3O_4$.

TG evaluation was performed in the following manner. That is, a coin cell was charged to 4.3 V at 0.1 C in argon, and then disassembled to dismount an electrode (positive electrode) therefrom. The electrode was washed with dimethyl carbonate (DMC) and then dried. Thereafter, a positive electrode active substance was peeled from the electrode and heated to 400°C at a rate of 10°C/min in an oxygen atmosphere using TG/DTA ("TG/DTA6300" manufactured by Seiko Instruments Co., Ltd.) to measure a weight change thereof.

Cell characteristics and thermal stability of the positive electrode active substance were evaluated by using a coil cell comprising a positive electrode, a negative electrode and an electrolyte solution which were produced by the following method.

<Evaluation of coin cell>

<Preparation of positive electrode>

A positive electrode active substance, acetylene black and graphite as a conductive agent, and polyvinylidene fluoride as a binder, were accurately weighed such that the weight ratio therebetween was 93:3:4, dispersed in N-methyl-2-pyrrolidone and then fully mixed with each other using a high-speed kneader to prepare a positive electrode compounding agent slurry. The thus prepared slurry was applied on an aluminum foil as a current collector by a doctor blade and then dried at 120°C, and the resulting sheet was blanked into a 16 mm$\phi$ disk shape to form a positive electrode plate.

<Preparation of negative electrode>

A metallic lithium foil was blanked into a 16 mm$\phi$ disk shape to form a negative electrode.

<Preparation of electrolyte solution>

A mixed solution comprising ethylene carbonate and diethyl carbonate at a volume ratio of 30:70 was mixed with 1 mol/L of lithium phosphate hexafluoride (LiPF6) as an electrolyte to prepare an electrolyte solution.

<Assembly of coin cell>

In a glove box kept in an argon atmosphere, the positive electrode and negative electrode obtained above were disposed in an SUS316L casing through a polypropylene separator, and the electrolyte solution was poured into the casing to thereby produce a coin cell having a diameter of 20 mm and a thickness of 3.2 mm.

<Evaluation of rate characteristics>

The above produced coin cell was subjected to charge/discharge test for secondary batteries. The measuring conditions were as follows. That is, under a cut-off voltage between 3.0 to 4.3 V, the coin cell was subjected to one charge/discharge cycle at 0.1 C and then to one charge/discharge cycle at 1 C to calculate a discharge capacity ratio thereof (1 C/0.1 C) as rate characteristics of the coin cell.

<Evaluation of thermal stability>

The above coin cell was charged to 4.3 V at 0.1 C. Then, the positive electrode active substance in the coin cell was measured using TG/DTA according to the above method. As a result, it was confirmed that a weight reduction rate of the positive electrode active substance as measured at 250°C was 0.7%.

<Evaluation of laminate cell>

<Preparation of positive electrode>

A positive electrode active substance, acetylene black and graphite as a conductive agent, and polyvinylidene fluoride as a binder, were accurately weighed such that the weight ratio therebetween was 93:3:4, dispersed in N-methyl-2-pyrrolidone and then fully mixed with each other using a high-speed kneader to prepare a positive electrode compounding agent slurry. The thus prepared slurry was applied on an aluminum foil as a current collector by a doctor blade and then dried at 120°C, and the resulting sheet was pressed by a roll press to prepare a positive electrode sheet.

Next, the thus prepared positive electrode sheet was cut into a positive electrode having a length of 25 mm and a width of 25 mm. Meanwhile, in one end portion of the thus obtained positive electrode, a positive electrode active substance layer was partially scraped off from a region having a length of 25 mm and a width of 5 mm on the positive electrode current collector to form a lead welding portion onto which an aluminum lead wire was welded as a positive electrode terminal.

<Preparation of negative electrode>

Graphite as a negative electrode active substance and polyvinylidene fluoride which were components of a negative electrode compounding agent were accurately weighed such that the weight ratio therebetween was 94:6, dispersed in N-methyl-2-pyrrolidone and then fully mixed with each other using a high-speed kneader to prepare a negative electrode compounding agent slurry. The thus prepared slurry was applied on a copper foil as a current collector by a doctor blade and then dried at 120°C, and the resulting sheet was pressed by a roll press to prepare a negative electrode sheet.

Next, the thus prepared negative electrode sheet was cut into a negative electrode having a length of 25 mm and a width of 25 mm. Meanwhile, in one end portion of the thus obtained negative electrode, a negative electrode active substance layer was partially scraped off from a region having a length of 25 mm and a width of 5 mm on the negative electrode current collector to form a lead welding portion onto which a nickel lead wire was welded as a negative electrode terminal.

<Preparation of electrolyte solution>

A mixed solution comprising ethylene carbonate and dimethyl carbonate at a volume ratio of 1:2 was mixed with 1 mol/L of lithium phosphate hexafluoride (LiPF6) as an electrolyte to prepare an electrolyte solution.

<Assembly of laminate cell>

Next, the positive electrode and negative electrode obtained above were laminated through a separator to obtain an electrode member. The thus obtained electrode member was immersed in a non-aqueous electrolyte solution to impregnate the positive electrode active substance layer, the negative electrode active substance layer and the separator with the electrolyte solution.

Next, the electrode member impregnated with the non-aqueous electrolyte solution was sandwiched between laminating films, and outer peripheral portions of the respective laminating films were placed under reduced pressure and heat-fused and sealed together to hermetically enclose the electrode member in the laminating films.

Thus, a non-aqueous electrolyte cell was produced. Meanwhile, the positive electrode terminal and the negative electrode terminal were derived outside from the laminating films.

<Evaluation of cell>

The cell was evaluated under a cut-off voltage between 4.2 to 3.0 V. Meanwhile, after flowing a constant current at 1 C through the cell until reaching the cut-off, the cell was charged until the current value was converged to C/200. The discharge of the cell was carried out in such a manner that the procedure of discharging the cell after flowing a constant current at 1 C through the cell until reaching the cut-off was repeated for 10 cycles. Meanwhile, the measurement was conducted in a constant temperature oven maintained at 25°C.

Example 2-1:

<Production of positive electrode active substance>

A reactor having an effective capacity of 10 L equipped with a draft tube, a baffle and a vane-type stirrer was filled with 8 L of ion-exchanged water. While fully stirring, a temperature within the reactor was adjusted to 50°C, and a sufficient amount of an oxygen-containing gas was allowed to pass through the reactor from a lower portion thereof, and then a 4 mol/L sodium hydroxide aqueous solution was dropped into the reactor such that the pH value of the solution in the reactor was adjusted to 12.5. A 1.5 mol/L cobalt sulfate aqueous solution was continuously supplied to the reactor at a average feed rate of 0.025 mol/(L·hr). At the same time, a 4 mol/L sodium hydroxide aqueous solution was continuously supplied to the reactor such that the pH value of the reaction solution in the reactor was adjusted to 12.5. As a result, cobalt oxyhydroxide particles produced by the rapid oxidation reaction were overflowed from an upper portion of the reactor, and then concentrated in a 0.4 L concentrator connected to an overflow pipe from the reactor. The resulting concentrated reaction solution was circulated to the reactor where the reaction was conducted until the concentration of the cobalt oxyhydroxide particles in the reaction solution within the reactor reached 15 mol/L.

After completion of the reaction, the resulting suspension was withdrawn from the reactor and washed with water using a filter press, and then the obtained filter cake was dried, thereby obtaining cobalt oxyhydroxide particles. As a result of subjecting the thus obtained cobalt oxyhydroxide particles to XRD analysis, it was confirmed that the cobalt oxyhydroxide particles were constituted from a cobalt oxyhydroxide single phase, and had an average secondary particle diameter (D50) of 17.6 $\mu$m, a frequency of a volume median particle diameter of 9.7%, a BET specific surface area (BET) of 1.26 $m^2/g$, a tap density (TD) of 3.08 $g/cm^3$, a crystallite size of a (003) plane (D003) of 602 Å, a crystallite size of a (110) plane (D110) of 470 Å, and a crystallite size ratio (D110/D003) of 0.78 (precursor 1).

The thus obtained cobalt oxyhydroxide particles (precursor 1) and a lithium compound were fully mixed with each other in such an amount that the molar ratio of lithium to cobalt (lithium/cobalt) was 1.01, and the resulting mixed particles were calcined at 1030°C for 10 hr in an oxidative atmosphere, thereby obtaining lithium cobaltate particles.

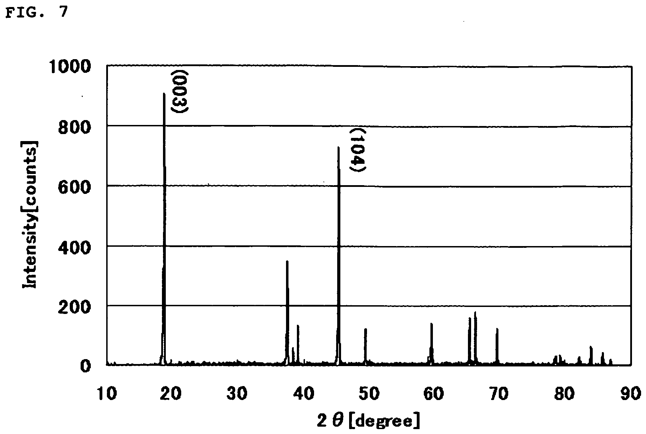

As a result of subjecting the thus obtained lithium cobaltate particles to X-ray diffraction analysis, it was confirmed that the lithium cobaltate particles were constructed from a lithium cobaltate single phase without any impurity phase (FIG. 7). Also, it was confirmed that the lithium cobaltate particles had an average secondary particle diameter (D50) of 15.7 $\mu$m, a BET specific surface area of 0.19 $m^2/g$, a compressed density (CD) (as measured by applying a pressure of 2.5 ton/cm$^2$ thereto) of 3.73 $g/cm^3$, an XRD intensity ratio [I(104)/I(003)] of 0.80, a total alkali content of 0.06% and a residual amount of $Co_3O_4$ of 208 ppm.

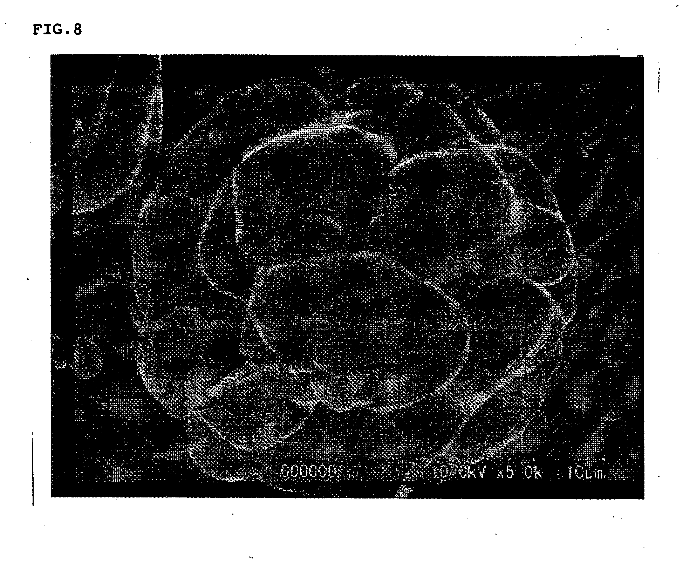

The results of SEM observation of the thus obtained lithium cobaltate particles is shown in FIG. 8. As shown in FIG. 8, the lithium cobaltate particles were aggregates of primary particles thereof and free from sharp edges, and contained no fine particles.

The coin cell produced using the above positive electrode active substance had an electrode density of 3.7 $g/cm^3$ and a rate characteristic (1C/0.1C) of 95%. The positive electrode active substance peeled from the electrode of the coin cell after being charged had a weight reduction rate of 0.7% as measured in TG at 250°C, and the laminate cell using the positive electrode active substance exhibited a capacity retention rate of 95% as measured after 100 cycles at 1C-1C.

Comparative Example 2-1:

<Production of positive electrode active substance>

A 0.5 mol/L cobalt -containing solution was prepared, and subjected to neutralization reaction by adding thereto a sodium hydroxide aqueous solution in an amount of 1.05 equivalent per equivalent of cobalt to be neutralized. Next, the resulting reaction solution was subjected to oxidation reaction at 90°C for 20 hr while blowing air thereinto, thereby obtaining cobalt oxide particles. The thus obtained cobalt oxide particles were constructed from a $Co_3O_4$ single phase, and had an average secondary particle diameter of 0.1 $\mu$m, a BET specific surface area of 12.0 $m^2/g$, and a tap density (TD) of 1.30 $g/cm^3$ (precursor 5).

The thus obtained cobalt oxide particles (precursor 5) and a lithium compound were fully mixed with each other in such an amount that the molar ratio of lithium to cobalt (lithium/cobalt) was 1.04, and the resulting mixed particles were calcined at 1030°C for 10 hr in an oxidative atmosphere, thereby obtaining lithium cobaltate particles.

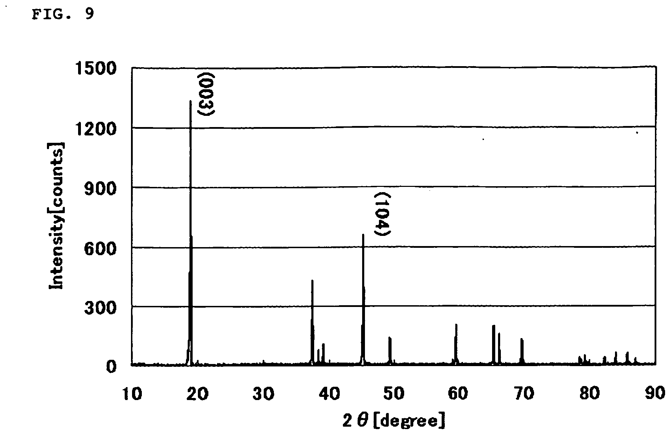

As a result of subjecting the thus obtained lithium cobaltate particles to X-ray diffraction analysis, it was confirmed that the lithium cobaltate particles were constructed from a lithium cobaltate single phase without any impurity phase (FIG. 9). Also, it was confirmed that the lithium cobaltate particles had an average secondary particle diameter (D50) of 13.5 $\mu$m, a BET specific surface area of 0.35 m$^2$/g, a compressed density (CD) (as measured by applying a pressure of 2.5 ton/cm$^2$ thereto) of 3.58 g/cm$^3$, an XRD intensity ratio [I(104)/I(003)] of 0.60, a total alkali content of 0.12% and an amount of residual $Co_3O_4$ of 100 ppm.

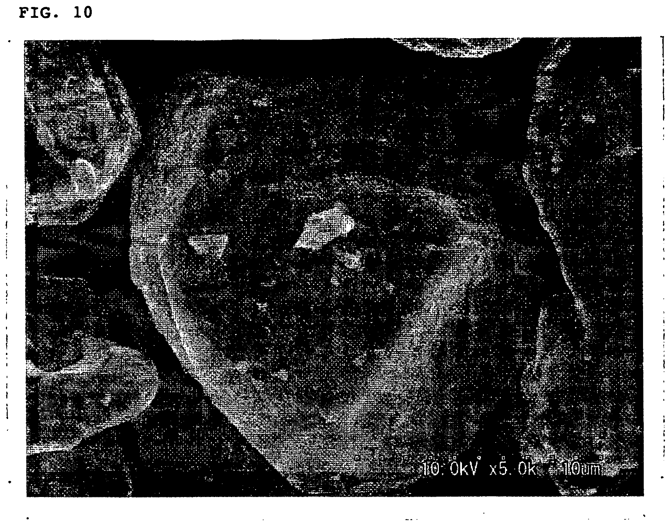

The results of SEM observation of the thus obtained lithium cobaltate particles is shown in FIG. 10. As shown in FIG. 10, the lithium cobaltate particles were particles having sharp edges, and fine particles were observed therein.

The coin cell produced using the above positive electrode active substance had an electrode density of 3.4 g/cm$^3$ and a rate characteristic (1.0 C/0.1 C) of 92%. The positive electrode active substance peeled from the electrode of the coin cell after being charged had a weight reduction rate of 0.3% as measured in TG at 250°C, and the laminate cell using the positive electrode active substance exhibited a capacity retention rate of 87% as measured after 100 cycles at 1C-1C.

Precursors 2 to 4 and 6:

The same procedure as defined above production of the precursor 1 was conducted except that the feed rate of the cobalt sulfate aqueous solution, the reaction time and the pH value of the reaction solution were variously changed, thereby obtaining cobalt oxyhydroxide particles. The production conditions of the cobalt oxyhydroxide particles are shown in Table 3, and various properties of the thus obtained cobalt oxyhydroxide particles are shown in Table 4.

Examples 2-2 to 2-15 and Comparative Examples 2-2 to 2-8:

The same procedure as defined in Example 2-1 was conducted except that the kind of precursor used, the mixing ratio to Li and the heating temperature were variously changed, thereby obtaining lithium cobaltate particles. The production conditions of the lithium cobaltate particles are shown in Table 5, and various properties of the thus obtained lithium cobaltate particles are shown in Table 6.

Table 3

| | Production conditions of cobalt oxyhydroxide particles | | |
|---|---|---|---|
| | m value (mol/L·hr) | Temperature (°C) | Co concentration (mol/L) |
| Precursor 1 | 0.025 | 50 | 1.5 |
| Precursor 2 | 0.020 | 50 | 1.5 |
| Precursor 3 | 0.025 | 55 | 1.5 |
| Precursor 4 | 0.025 | 45 | 1.5 |
| Precursor 5 | – | – | – |
| Precursor 6 | 0.025 | 50 | 1.5 |

Table 3 (continued)

| | Production conditions of cobalt oxyhydroxide particles | | |
|---|---|---|---|
| | NaOH concentration (mol/L) | pH (-) | Reaction concentration (mol/L) |
| Precursor 1 | 4 | 12.5 | 15 |
| Precursor 2 | 4 | 12.5 | 15 |
| Precursor 3 | 4 | 12.2 | 15 |
| Precursor 4 | 4 | 12.2 | 15 |
| Precursor 5 | – | – | – |
| Precursor 6 | 4 | 13.5 | 15 |

## Table 4

| | Properties of cobalt oxyhydroxide particles | | |
|---|---|---|---|
| | D50 ($\mu$m) | Frequency (%) | BET ($m^2/g$) |
| Precursor 1 | 16.5 | 9.7 | 1.26 |
| Precursor 2 | 17.5 | 18.8 | 1.25 |
| Precursor 3 | 16.9 | 17.8 | 1.10 |
| Precursor 4 | 15.9 | 18.0 | 1.37 |
| Precursor 5 | 0.1 | 9.2 | 12.00 |
| Precursor 6 | 16.5 | 13.5 | 10.90 |

## Table 4 (continued)

| | Properties of cobalt oxyhydroxide particles | | |
|---|---|---|---|
| | ≤ Relational formula 1 | TD ($g/cm^3$) | ≥ Relational formula 2 |
| Precursor 1 | 1.50 | 3.08 | 2.91 |
| Precursor 2 | 1.50 | 3.03 | 3.00 |
| Precursor 3 | 1.50 | 3.11 | 2.95 |
| Precursor 4 | 1.50 | 3.01 | 2.85 |
| Precursor 5 | 61.52 | 1.30 | −5.40 |
| Precursor 6 | 1.50 | 2.23 | 2.91 |

## Table 4 (continued)

| | Properties of cobalt oxyhydroxide particles | | | |
|---|---|---|---|---|
| | D003 (Å) | D110 (Å) | D110/D003 (−) | ≤ Relational formula 3 |
| Precursor 1 | 602 | 470 | 0.78 | 1.00 |
| Precursor 2 | 503 | 411 | 0.82 | 1.00 |
| Precursor 3 | 512 | 392 | 0.77 | 1.00 |
| Precursor 4 | 501 | 415 | 0.83 | 1.00 |
| Precursor 5 | − | − | − | − |
| Precursor 6 | 370 | 523 | 1.41 | 1.00 |

| Table 5 | | | |
|---|---|---|---|
| | Precursor | Li ratio (Li/metal) | Calcining temperature (°C) |
| Example 2-1 | Precursor 1 | 1.01 | 1030 |
| Example 2-2 | Precursor 1 | 1.00 | 1000 |
| Example 2-3 | Precursor 1 | 1.00 | 1030 |
| Example 2-4 | Precursor 1 | 1.01 | 1000 |
| Example 2-5 | Precursor 2 | 1.00 | 1000 |
| Example 2-6 | Precursor 2 | 1.00 | 1030 |

(continued)

| Table 5 | | | |
|---|---|---|---|
| | Precursor | Li ratio (Li/metal) | Calcining temperature (°C) |
| Example 2-7 | Precursor 2 | 1.01 | 1000 |
| Example 2-8 | Precursor 2 | 1.01 | 1030 |
| Example 2-9 | Precursor 3 | 1.02 | 1000 |
| Example 2-10 | Precursor 3 | 1.01 | 1015 |
| Example 2-11 | Precursor 3 | 1.02 | 1030 |
| Example 2-12 | Precursor 3 | 1.00 | 1030 |
| Example 2-13 | Precursor 4 | 1.00 | 1000 |
| Example 2-14 | Precursor 4 | 1.02 | 1030 |
| Example 2-15 | Precursor 4 | 1.00 | 1030 |
| Comparative Example 2-1 | Precursor 5 | 1.04 | 1030 |
| Comparative Example 2-2 | Precursor 6 | 1.00 | 1030 |
| Comparative Example 2-3 | Precursor 6 | 1.01 | 1030 |
| Comparative Example 2-4 | Precursor 6 | 1.00 | 1000 |
| Comparative Example 2-5 | Precursor 6 | 1.01 | 1000 |

Table 6

| | Properties of lithium cobaltate particles | | |
|---|---|---|---|
| | D50 (µm) | BET (m²/g) | CD (2.5t) (g/cm³) |
| Example 2-1 | 15.7 | 0.19 | 3.73 |
| Example 2-2 | 16.2 | 0.24 | 3.72 |
| Example 2-3 | 16.4 | 0.20 | 3.72 |
| Example 2-4 | 15.4 | 0.22 | 3.73 |
| Example 2-5 | 17.1 | 0.20 | 3.72 |
| Example 2-6 | 16.9 | 0.19 | 3.71 |
| Example 2-7 | 16.3 | 0.21 | 3.73 |
| Example 2-8 | 15.3 | 0.20 | 3.75 |
| Example 2-9 | 15.1 | 0.19 | 3.72 |
| Example 2-10 | 16.0 | 0.18 | 3.75 |
| Example 2-11 | 16.1 | 0.16 | 3.73 |
| Example 2-12 | 17.1 | 0.18 | 3.71 |
| Example 2-13 | 15.9 | 0.22 | 3.70 |
| Example 2-14 | 15.1 | 0.17 | 3.73 |
| Example 2-15 | 16.4 | 0.18 | 3.71 |
| Comparative Example 2-1 | 13.5 | 0.35 | 3.58 |
| Comparative Example 2-2 | 13.9 | 0.24 | 3.64 |
| Comparative Example 2-3 | 13.6 | 0.19 | 3.64 |
| Comparative Example 2-4 | 13.6 | 0.26 | 3.58 |
| Comparative Example 2-5 | 12.6 | 0.23 | 3.60 |

Table 6 (continued)

| | Properties of lithium cobaltate particles | | |
|---|---|---|---|
| | I(104/003) | Total alkali content (wt%) | Residual amount of $Co_3O_4$ (ppm) |
| Example 2-1 | 0.80 | 0.06 | 208 |
| Example 2-2 | 0.91 | 0.05 | 607 |
| Example 2-3 | 0.85 | 0.04 | 454 |
| Example 2-4 | 0.81 | 0.05 | 486 |
| Example 2-5 | 0.86 | 0.06 | 619 |
| Example 2-6 | 0.84 | 0.08 | 352 |
| Example 2-7 | 0.83 | 0.07 | 518 |
| Example 2-8 | 0.82 | 0.07 | 333 |
| Example 2-9 | 0.75 | 0.07 | 259 |
| Example 2-10 | 0.81 | 0.06 | 416 |
| Example 2-11 | 0.73 | 0.06 | 150 |
| Example 2-12 | 0.87 | 0.04 | 785 |
| Example 2-13 | 0.93 | 0.06 | 597 |
| Example 2-14 | 0.75 | 0.06 | 118 |
| Example 2-15 | 0.87 | 0.05 | 308 |
| Comparative Example 2-1 | 0.60 | 0.12 | 100 |
| Comparative Example 2-2 | 0.89 | 0.05 | 602 |
| Comparative Example 2-3 | 0.87 | 0.05 | 112 |
| Comparative Example 2-4 | 0.90 | 0.06 | 369 |
| Comparative Example 2-5 | 0.88 | 0.07 | 205 |

Table 6 (continued)

| | Cell characteristics | | | |
|---|---|---|---|---|
| | TG weight reduction rate (250°C, 4.5V) | Electrode density | Rate charac -teristic | Laminate cycle capacity retention rate |
| Example 2-1 | 0.7 | 3.7 | 95 | 95 |
| Example 2-2 | 0.9 | 3.6 | 95 | 95 |
| Example 2-3 | 0.6 | 3.6 | 95 | 95 |
| Example 2-4 | 0.9 | 3.6 | 95 | 94 |
| Example 2-5 | 0.6 | 3.6 | 95 | 95 |
| Example 2-6 | 0.6 | 3.7 | 95 | 95 |
| Example 2-7 | 0.6 | 3.7 | 95 | 95 |
| Example 2-8 | 0.6 | 3.8 | 95 | 95 |
| Example 2-9 | 0.5 | 3.7 | 95 | 95 |
| Example 2-10 | 0.6 | 3.7 | 95 | 95 |
| Example 2-11 | 0.5 | 3.7 | 95 | 94 |
| Example 2-12 | 0.8 | 3.7 | 95 | 95 |
| Example 2-13 | 0.9 | 3.7 | 95 | 94 |
| Example 2-14 | 0.6 | 3.7 | 95 | 94 |
| Example 2-15 | 0.7 | 3.6 | 95 | 95 |
| Comparative Example 2-1 | 0.3 | 3.4 | 92 | 87 |
| Comparative Example 2-2 | 1.2 | 3.4 | 93 | 92 |
| Comparative Example 2-3 | 1.1 | 3.3 | 93 | 91 |
| Comparative Example 2-4 | 1.2 | 3.2 | 93 | 92 |
| Comparative Example 2-5 | 1.1 | 3.2 | 93 | 92 |

As shown in the above Examples, the secondary batteries produced by using the lithium cobaltate particles according to the present invention (Examples 2-1 to 2-15) all had a rate characteristic of not less than 94%, and the batteries when used in the form of a laminate cell had a capacity retention rate of not less than 93%. Therefore, it was confirmed that the batteries were suitable as secondary batteries.

Industrial Applicability

When using the cobalt oxyhydroxide particles according to the present invention as a precursor of a positive electrode active substance, it is possible to obtain a non-aqueous electrolyte secondary cell having a small specific surface area, a high compressed density, a high electrode density required for secondary batteries, and good cycle characteristics.

When using a positive electrode active substance prepared from the lithium cobaltate particles according to the present invention as a precursor thereof, it is possible to obtain a non-aqueous electrolyte secondary battery having a small specific surface area, a high compressed density, a high electrode density required for secondary batteries, good cycle characteristics and good thermal stability.

## Claims

1. Lithium cobaltate particles having an average secondary particle diameter (D50) of 15.0 to 25.0 $\mu$m, a BET specific surface area (BET) of 0.10 to 0.30 m$^2$/g, a compressed density (CD) as measured by applying a pressure of 2.5 t/cm$^2$ thereto of 3.65 to 4.00 g/cm$^3$, and wherein in an X-ray diffraction pattern of the lithium cobaltate particles, an intensity ratio between a (003) plane and a (104) plane [I(104)/I(003)] of the lithium cobaltate particles is 0.70 to 1.20.

2. Lithium cobaltate particles according to claim 1, wherein a total content of alkalis in the lithium cobaltate particles is not more than 0.10% by weight, and a residual amount of $Co_3O_4$ in the the lithium cobaltate particles is not more than 1000 ppm.

3. Cobalt oxyhydroxide particles having an average secondary particle diameter (D50) of 3.0 to 25.0 $\mu$m, a BET specific surface area (BET) of 0.1 to 20.0 m$^2$/g and a tap density (TD) of 1.0 to 3.5 g/cm$^3$ in which the average secondary particle diameter (D50) and the BET specific surface area (BET) of the cobalt oxyhydroxide particles satisfy the following relational formula 1:

   ```
   (Relational Formula 1)

   in case of D50 < 12, BET ≤ -12.536 x LN(D50) + 32.65, and

   in case of D50 ≥ 12, BET ≤ 1.5.
   ```

4. Cobalt oxyhydroxide particles according to claim 3, wherein the crystallite size of the (003) plane is 300 to 700 Å, and the crystallite size of the (110) plane is 300 to 800 A.

5. A process for producing the cobalt oxyhydroxide particles as defined in claim 3 or claim 4, comprising the step of dropping a solution comprising a cobalt salt and an alkali solution into an aqueous solution at the same time to neutralize the solution comprising the cobalt salt, wherein the pH of the reaction solution is adjusted to the range of 12.0 to 13.0, and rapidly conducting an oxidation reaction of the cobalt salt by passing an oxygen-containing gas or a mixed gas of an oxygen-containing gas and a nitrogen-containing gas through the aqueous solution to thereby obtain the cobalt oxyhydroxide particles.

6. A process for producing the cobalt oxyhydroxide particles according to claim 5, wherein the solution comprising the cobalt salt and the alkali solution are dropped into the aqueous solution filled in a reactor connected to a concentrator at the same time to neutralize the solution comprising the cobalt salt and rapidly conduct an oxidation reaction of the cobalt salt to thereby obtain a reaction slurry comprising cobalt oxyhydroxide particles; the reaction slurry obtained in the reactor is circulated between the reactor and the concentrator; and only sodium hydroxide is used as the alkali solution.

7. A positive electrode which comprises the lithium cobaltate particles as defined in either claim 1 or claim 2, a conductive agent and a binder.

8. A non-aqueous electrolyte secondary battery comprising a positive electrode comprising the lithium cobaltate particles as defined in either claim 1 or claim 2.

9. Use of the lithium cobaltate particles as defined in either claim 1 or claim 2 as a positive electrode active substance in a non-aqueous electrolyte secondary battery.

## Patentansprüche

1. Lithiumcobaltat-Partikel mit einem durchschnittlichen Sekundärpartikeldurchmesser (D50) von 15,0 bis 25,0 $\mu$m, einer BET-spezifischen Oberfläche (BET) von 0,10 bis 0,30 m$^2$/g, einer komprimierten Dichte (CD) gemessen durch Anwenden eines Drucks von 2,5 t/cm$^2$ darauf von 3,65 bis 4,00 g/cm$^3$, und wobei in einem Röntgendiffraktionsmuster der Lithiumcobaltat-Partikel ein Intensitätsverhältnis zwischen einer (003) Ebene und einer (104) Ebene [1(104) / I(003)] der Lithiumcobaltat-Partikel 0,70 bis 1,20 ist.

2. Lithiumcobaltat-Partikel nach Anspruch 1, wobei ein Gesamtgehalt an Alkalien in den Lithiumcobaltat-Partikeln nicht mehr als 0,10 Gew.-% ist, und eine Restmenge an $Co_3O_4$ in den Lithiumcobaltat-Partikeln nicht mehr als 1000 ppm ist.

3. Cobaltoxyhydroxidpartikel mit einem durchschnittlichen Sekundärpartikeldurchmesser (D50) von 3,0 bis 25,0 μm, einer BET-spezifischen Oberfläche (BET) von 0,1 bis 20,0 $m^2$/g und einer Klopfdichte (TD) von 1,0 bis 3,5 g/$cm^3$, wobei der durchschnittliche Sekundärpartikeldurchmesser (D50) und die BET-spezifische Oberfläche (BET) der Cobaltoxyhydroxidpartikel die folgende Verhältnisformel 1 erfüllen:

$$\text{(Verhältnisformel 1)}$$

$$\text{im Fall von D50} < 12,\ \text{BET} \leq -12{,}536 \times \text{LN(D50)} + 32{,}65,\ \text{und}$$

$$\text{im Fall von D50} \geq 12,\ \text{BET} < 1{,}5.$$

4. Cobaltoxyhydroxidpartikel nach Anspruch 3, wobei die Kristallitgröße der (003) Ebene 300 bis 700 Å ist, und die Kristallitgröße der (110) Ebene 300 bis 800 Å ist.

5. Verfahren zum Herstellen der Cobaltoxyhydroxidpartikel wie definiert in Anspruch 3 oder Anspruch 4, umfassend den Schritt eines Tropfens einer Lösung umfassend ein Cobaltsalz und eine Alkalilösung in eine wässrige Lösung zur gleichen Zeit, um die Lösung umfassend das Cobaltsalz zu neutralisieren, wobei der pH der Reaktionslösung auf den Bereich von 12,0 bis 13,0 eingestellt wird, und eines schnellen Durchführens einer Oxidationsreaktion des Cobaltsalzes, indem ein sauerstoffenthaltendes Gas oder ein gemischtes Gas aus einem sauerstoffenthaltenden Gas und einem stickstoffenthaltenden Gas durch die wässrige Lösung geleitet wird, um dadurch die Cobaltoxyhydroxidpartikel zu erlangen.

6. Verfahren zum Herstellen der Cobaltoxyhydroxidpartikel nach Anspruch 5, wobei die Lösung umfassend das Cobaltsalz und die Alkalilösung in die wässrige Lösung getropft werden, die in einen Reaktor gefüllt ist, der mit einem Konzentrator verbunden ist, zur gleichen Zeit, um die Lösung umfassend das Cobaltsalz zu neutralisieren und schnell eine Oxidationsreaktion des Cobaltsalzes durchzuführen, um dadurch eine Reaktionsaufschlämmung umfassend Cobaltoxyhydroxidpartikel zu erlangen; die im Reaktor erlangte Reaktionsaufschlämmung wird zwischen dem Reaktor und dem Konzentrator umgewälzt; und nur Natriumhydroxid wird als die Alkalilösung verwendet.

7. Positive Elektrode, die die Lithiumcobaltat-Partikel wie definiert in Anspruch 1 oder Anspruch 2, ein leitfähiges Mittel und einen Binder umfasst.

8. Akkumulator mit nichtwässrigem Elektrolyt umfassend eine positive Elektrode, die die Lithiumcobaltat-Partikel wie definiert in Anspruch 1 oder Anspruch 2 umfasst.

9. Verwendung der Lithiumcobaltat-Partikel wie definiert in Anspruch 1 oder Anspruch 2 als aktive Substanz einer positiven Elektrode in einem Akkumulator mit nichtwässrigem Elektrolyt.

**Revendications**

1. Particules de cobaltate de lithium ayant un diamètre moyen de particule secondaire (D50) de 15,0 à 25,0 μm, une surface spécifique BET (BET) de 0,10 à 0,30 $m^2$/g, une masse volumique comprimée (CD) telle que mesurée par application à celles-ci d'une pression de 2,5 t/$cm^2$ de 3,65 à 4,00 g/$cm^3$, et dans un profil de diffraction aux rayons X des particules de cobaltate de lithium, un rapport d'intensité entre un plan (003) et un plan (104) [I(104)/I(003)] des particules de cobaltate de lithium étant de 0,70 à 1,20.

2. Particules de cobaltate de lithium selon la revendication 1, une teneur totale en alkalis dans les particules de lithium n'étant pas supérieure à 0,10 % en poids, et une quantité résiduelle de $Co_3O_4$ dans les particules de cobaltate de lithium n'étant pas supérieure à 1000 ppm.

3. Particules d'oxyhydroxyde de cobalt ayant un diamètre moyen de particule secondaire (D50) de 3,0 à 25,0 μm, une surface spécifique BET (BET) de 0,1 à 20,0 $m^2$/g et une masse volumique tassée (TD) de 1,0 à 3,5 g/$cm^3$, le diamètre moyen de particule secondaire (D50) et la surface spécifique BET (BET) des particules d'oxyhydroxyde de cobalt satisfaisant la formule relationnelle 1 suivante :

(Formule relationnelle 1)

dans le cas où D50 < 12, BET ≤ -12,536 x LN(D50) + 32,65, et

dans le cas où D50 ≥ 12, BET ≤ 1,5.

4. Particules d'oxyhydroxyde de cobalt selon la revendication 3, dans lesquelles la taille de cristallite du plan (003) est de 300 à 700 A et la taille de cristallite du plan (110) est de 300 à 800 A.

5. Procédé de production des particules d'oxyhydroxyde de cobalt telles que définies dans la revendication 3 ou la revendication 4, comprenant l'étape consistant à faire tomber une solution comprenant un sel de cobalt et une solution alcaline dans une solution aqueuse tout en neutralisant la solution comprenant le sel de cobalt, le pH de la solution de réaction étant ajusté dans la plage de 12,0 à 13,0, et la réalisation rapide d'une réaction d'oxydation du sel de cobalt en faisant passer un gaz contenant de l'oxygène ou un gaz mixte d'un gaz contenant de l'oxygène et d'un gaz contenant de l'azote à travers la solution aqueuse pour ainsi obtenir les particules d'oxyhydroxyde de cobalt.

6. Procédé de production des particules d'oxyhydroxyde de cobalt selon la revendication 5, dans lequel on fait tomber la solution comprenant le sel de cobalt et la solution alcaline dans la solution aqueuse chargée dans un réacteur relié à un concentrateur tout en neutralisant la solution comprenant le sel de cobalt et la réalisation rapide d'une réaction d'oxydation du sel de cobalt pour ainsi obtenir une suspension épaisse de réaction comprenant des particules d'oxyhydroxyde de cobalt ;
la suspension épaisse de réaction obtenue dans le réacteur est mise en circulation entre le réacteur et le concentrateur ; et seul l'hydroxyde de sodium est utilisé en tant que solution alcaline.

7. Electrode positive qui comprend les particules de cobaltate de lithium telles que définies dans la revendication 1 ou la revendication 2, un agent conducteur et un liant.

8. Batterie secondaire à électrolyte non aqueux comprenant une électrode positive comprenant les particules de cobaltate de lithium telles que définies dans la revendication 1 ou la revendication 2.

9. Utilisation des particules de cobaltate de lithium telles que définies dans la revendication 1 ou la revendication 2 en tant que substance active d'électrode positive dans une batterie secondaire à électrolyte non aqueux.

DRAWINGS

FIG. 1

FIG. 2

FIG. 3

FIG. 4

FIG. 5

FIG. 6

FIG. 7

EP 2 314 545 B1

FIG.8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004035342 A
- JP 2004196603 A
- JP 2005104771 A
- JP 2007001809 A
- JP 2003002661 A
- JP 2004182564 A
- JP 2005206422 A
- WO 2009003573 A1
- JP 2007084410 A